# EUROPÄISCHE PATENTSCHRIFT

(11) **EP 2 729 411 B1**
(45) Veröffentlichungstag und Bekanntmachung des Hinweises auf die Patenterteilung: **21.12.2016**
(21) Anmeldenummer: 12738063.2
(22) Anmeldetag: 06.07.2012
(51) Int. Cl.: C01B 31/02, H01G 11/36, H01G 2/08, B82Y 30/00, B82Y 40/00

(54) **SCHICHTSYSTEM MIT EINER SCHICHT AUS PARALLEL ZUEINANDER ANGEORDNETEN KOHLENSTOFFNANORÖHREN UND EINER ELEKTRISCH LEITENDEN DECKSCHICHT, VERFAHREN ZUR HERSTELLUNG DES SCHICHTSYSTEMS UND DESSEN VERWENDUNG IN DER MIKROSYSTEMTECHNIK**
LAYER SYSTEM HAVING A LAYER OF CARBON NANOTUBES ARRANGED PARALLEL TO EACH OTHER AND AN ELECTRICALLY CONDUCTIVE SURFACE LAYER, METHOD FOR PRODUCING THE LAYER SYSTEM, AND USE OF THE LAYER SYSTEM IN MICROSYSTEM TECHNOLOGY
SYSTÈME DE COUCHES COMPRENANT UNE COUCHE DE NANOTUBES DE CARBONE PARALLÈLES ET UNE COUCHE DE RECOUVREMENT ÉLECTRIQUEMENT CONDUCTRICE, PROCÉDÉ DE FABRICATION DE CE SYSTÈME DE COUCHES ET SON UTILISATION DANS LES MICROSYSTÈMES

(30) Priorität: 08.07.2011 DE 102011051705
(43) Veröffentlichungstag der Anmeldung: 14.05.2014
(73) Patentinhaber: Fraunhofer Gesellschaft zur Förderung der angewandten Forschung E.V., 80686 München (DE); Technische Universität Chemnitz, 09111 Chemnitz (DE)
(72) Erfinder: HERMANN, Sascha, 09126 Chemnitz (DE); GESSNER, Thomas, 09113 Chemnitz (DE); SCHULZ, Stefan E., 09120 Chemnitz (DE)
(74) Vertreter: Strehl Schübel-Hopf & Partner
(86) Internationale Anmeldenummer: PCT/EP2012/063280
(87) Internationale Veröffentlichungsnummer: WO 2013/007645

(56) Entgegenhaltungen:
- WO-A1-2005/102922
- WO-A1-2008/119138
- US-A1- 2007 090 489
- WEI BINGQING ET AL: "Lift-up growth of aligned carbon nanotube patterns", APPLIED PHYSICS LETTERS, AIP, AMERICAN INSTITUTE OF PHYSICS, MELVILLE, NY, US, Bd. 77, Nr. 19, 6. November 2000 (2000-11-06), Seiten 2985-2987, XP012026532, ISSN: 0003-6951, DOI: 10.1063/1.1323544
- CHEN Z ET AL: "Sandwich growth of carbon nanotubes", DIAMOND AND RELATED MATERIALS, ELSEVIER SCIENCE PUBLISHERS, AMSTERDAM, NL, Bd. 15, Nr. 1, 1. Januar 2006 (2006-01-01) , Seiten 104-108, XP028000420, ISSN: 0925-9635, DOI: 10.1016/J.DIAMOND.2005.07.024 [gefunden am 2006-01-01]
- HUI PAN ET AL: "Carbon Nanotubes for Supercapacitor", NANOSCALE RESEARCH LETTERS, Bd. 5, Nr. 3, 1. März 2010 (2010-03-01), Seiten 654-668, XP055047419, ISSN: 1931-7573, DOI: 10.1007/s11671-009-9508-2
- SCHMIDT O G ET AL: "THIN SOLID FILMS ROLL UP INTO NANOTUBES", NATURE: INTERNATIONAL WEEKLY JOURNAL OF SCIENCE, NATURE PUBLISHING GROUP, UNITED KINGDOM, Bd. 410, Nr. 168, 8. März 2001 (2001-03-08), Seite 168, XP001148344, ISSN: 0028-0836, DOI: 10.1038/35065525 in der Anmeldung erwähnt
- PRINZ YA V ET AL: "FREE-STANDING AND OVERGROWN INGAAS/GAAS NANOTUBES, NANOHELICS AND THEIR ARRAYS", PHYSICA E - LOW-DIMENSIONAL SYSTEMS AND NANOSTRUCTURES, ELSEVIER SCIENCE BV, NL, Bd. 6, Nr. 1-04, 1. Februar 2000 (2000-02-01), Seiten 828-831, XP001148343, ISSN: 1386-9477, DOI: 10.1016/S1386-9477(99)00249-0 in der Anmeldung erwähnt

## Beschreibung

Die vorliegende Erfindung betrifft ein Schichtsystem mit einer Schicht aus parallel bzw. im Wesentlichen parallel zueinander ausgerichteten Kohlenstoffnanoröhren (CNTs) und einer Deckschicht mit metallischen Eigenschaften, die in elektrisch und thermisch leitendem Kontakt mit den CNTs steht. Das Schichtsystem kann weiterhin eine Basisschicht und/oder ein Substrat aufweisen, die/das metallische oder dielektrische Eigenschaften besitzen kann. Das Schichtsystem lässt sich mit Hilfe einer Katalysatorschicht auf einer Basisschicht und/oder einem Substrat erzeugen, die neben einem für das Wachstum vom CNTs bekannten Katalysator ein Strukturierungsmaterial aufweist.

Kohlenstoffnanoröhren (engl. carbon nanotubes = CNT) bieten auf Grund ihrer besonderen Eigenschaften potentielle Einsatzmöglichkeiten in einer Vielzahl von Anwendungen. Hervorzuheben sind die eindimensionale Struktur mit hohen Aspektverhältnissen, strukturabhängige physikalische Eigenschaften, ballistischer Elektronentransport, thermische Leitfähigkeiten (bis 6000 W/m K) sowie extreme mechanische Eigenschaften. Die Erzeugung von CNTs ist mit verschiedenen Verfahren wie Laserablation, Lichtbogenentladung oder Gasphasenabscheidung (engl. CVD) möglich. Des Weiteren ist eine Abscheidung von vorgefertigten CNTs mit verschiedenen Verfahren, wie Spin-on, Ink-jet oder Dielektrophorese möglich. Bei letzteren Verfahren sind Integrationsmöglichkeiten eingeschränkt, da man zum einen primär auf eine horizontale Anordnung von CNTs eingeschränkt ist und zum anderen verschiedene Chemikalien erforderlich sind, die sich zum Teil störend auf die Applikation auswirken. Für viele Anwendungen ist deswegen das direkte Wachstum von CNTs in den applikationsrelevanten Strukturen erforderlich, wobei sowohl horizontale als auch vertikale Anordnungen möglich sind. Hierbei hat sich die CVD oder die plasmaunterstützte CVD (engl. PECVD) auf Grund moderater Wachstumstemperaturen und Selektivität herauskristallisiert. Hierbei wachsen CNTs aus Katalysatoren wie den Metallen der Eisengruppe (Ni, Co, Fe), Palladium oder binären Systemen wie Co-Mo, Pd-Se, Fe-Ni oder Ni-Cu. An diesen erfolgt eine katalytische Zersetzung eines C-haltigen Precursors bei Temperaturen im Bereich 300 bis 900°C. Trotz großer Fortschritte bei den CVD-Verfahren gibt es dennoch große Schwierigkeiten, CNTs in elektronische und sensorische Bauelemente zu integrieren. Zu nennen ist dabei die Porosität auf Grund begrenzter CNT-Dichte. Der Füllungsgrad ist im Allgemeinen deutlich kleiner als die dichteste Packung (Dijon, J.; Fournier, A.; Szkutnik, P.D.; Okuno, H.; Jayet, C.; Fayolle, M.: "Carbon nanotubes for interconnects in future integrated circuits: The challenge of the density" Diamond and Related Materials, vol. 19(5-6), pp. 382-388, 2010). Durch spezielle Prozessführung konnte bisher ein Füllungsgrad von maximal 40% erreicht werden Yamazaki, Y.; Katagiri, M.; Sakuma, N.; Suzuki, M.; Sato, S.; Nihei, M.; Wada, M.; Matsunaga, N. et al: "Synthesis of a Closely Packed Carbon Nanotube Forest by a Multi-Step Growth Method Using Plasma-Based Chemical Vapor Deposition" Appl Phys Express, vol. 3(5), pp. 055002, 2010. Dies führt zu einer Reihe von sowohl grundlegenden als auch technologisch anspruchsvollen Problemen. Zum einem müssen senkrecht gewachsene CNTs für elektrisch/thermische Anwendungen auch am oberen Ende gut kontaktiert werden. Eine einfache Einbettung mit einem Metall würde zum einen zu einer Interdiffusion der Materialien auf Grund der geringen Dichte führen. Zum anderen wird dadurch kein guter Kontakt erzeugt, da die Schalen im Allgemeinen geschlossen sind. Somit ergibt sich nur ein Kontakt zur äußersten Schale. Es gibt Entwicklungen, die mit Hilfe des chemisch mechanischen Polierens (CMP) die CNT-Enden öffnen. Dies erfordert allerdings eine mechanische Stabilisierung mit zusätzlichen Bearbeitungsschritten, wie das Einbringen eines Füllers (Dielektrikum) und das CMP (z.B. Yokoyama, D.; Iwasaki, T.; Ishimaru, K.; Sato, S.; Hyakushima, T.; Nihei, M.; Awano, Y.; Kawarada, H.: "Electrical properties.of carbon nanotubes grown at a low temperature for use as interconnects" Jpn J Appl Phys, vol. 47(4 PART 1), pp. 1985-1990, 2008). Dieses Verfahren ist nur sehr bedingt geeignet für ULSI (eng. Ultra-large scale integrated) -Anwendungen, denn das homogene und lückenlose Füllen von Zwischenräumen im Nanometerbereich zwischen Nanostrukturen mit hohen Aspektverhältnissen ist bisher nicht realisiert worden. Es verbleiben Einschüsse, die zu ernsten Zuverlässigkeitsproblemen im Anwendungsfall führen können. Für andere Anwendungen ist die Erzeugung einer Schicht mit senkrechten CNTs erforderlich, die keinerlei Füllungen der Zwischenräume aufweisen, aber dennoch gute elektrische/thermische Kontakte an den CNT-Enden haben. In dem Fall sind bisherige Verfahren nicht geeignet, da stets eine Interdiffussion des Kontaktmaterials und der CNTs zu erwarten sind sowie Kontakte nicht optimal sein können. Für viele Anwendungsfälle ist außerdem der Umstand problematisch, dass die CNT-Länge nicht gleichmäßig ist. Diese unterliegt starken Schwankungen, sodass auch aus diesem Grund eine Stabilisierung und Planarisierung mittels CMP erforderlich ist.

In sensorischen Anwendungen, die auf CNTs und deren besonderen Eigenschaften aufbauen, gibt es ebenfalls große technologische Herausforderungen. Für eine Detektion kleinster Bewegungen, ausgelöst durch Deformation (Verbiegung, Druck) oder Bewegung/Beschleunigung (Translation, Rotation, Vibration), kann man die Feldemission ausnutzen. Diese ist bei CNTs aufgrund der Durchmesser von wenigen Nanometern besonders stark und erlaubt Anwendungen, wie z.B. Feldemissionsdisplays. Ebenfalls eignet sich dieser Effekt zur Bewegungsdetektion (Liu, P.; Dong, L.; Arai, F.; Fukuda, T.: "Nanotube multi-functional nanoposition sensors" Proceedings of the Insfitution of Mechanical Engineers, Part N: Journal of Nanoengineering and Nanosystems, vol. 219(1), pp. 23-27, 2005). Für eine effiziente Umsetzung dieses Bewegungsdetektionsprinzips sind dichte und vertikale CNTs notwendig, die einseitig einen guten elektrischen Kontakt zur Elektrode und auf der gegenüberliegenden Seite eine Elektrode im definierten Abstand haben. Für die Erzeugung solcher CNT-Schichten bzw. CNT-Arrays ist die CVD-Methode prädestiniert. Wenn man allerdings von konventionellen CNTs, die im "tip"- oder "root"-Wachstum in CVD-Prozessen erzeugt wurden, ausgeht, sollte eine starke Längenvariation, wie sie im Allgemeinen vorliegt, zu großen Integrationsproblemen und Einschränkungen bei der Bauelementperformance führen. So erfordert z.B. die Längenvariation einen genügend großen Abstand zwischen CNT-Ende und Gegenelektrode, was konsequenterweise auch die Betriebsspannung deutlich in die Höhe treibt. Des Weiteren ist das Aufbringen einer Gegenelektrode mit gewissem Aufwand verbunden, der unter Umstanden die Umsetzung von low-cost-Bauelementen erschweren könnte. Generell gibt es daher nach wie vor große technologische Probleme bei der Integration von CNTs in Sensoren, Interconnects oder Aktoren. Auch neuartige komplexe Nanosysteme, bestehend aus verschiedenen Nanokomponenten, die selektiv mit bestimmten physikalischen Eigenschaften ausgestattet sind, lassen sich mit bisherigen Ansätzen nur schwer realisieren.

Eine Vielzahl von Veröffentlichungen beschäftigt sich mit der Herstellung vertikal aus einem Untergrund herauswachsender CNTs. Diese Wachstümsart wird als "root"-Wachstum bezeichnet. In der Literatur finden sich einige Hinweise auf chromhaltige Träger/KatalysatorSysteme, die für das Wachstum von CNTs eingesetzt werden können. So verwendeten Sohn, J.I.; Nam, C.; Lee, S.: in ihrem Artikel "Vertically aligned carbon nanotube growth by pulsed laser deposition and thermal chemical vapor deposition methods" Applied Surface Science, vol. 197-198, pp. 568-573, 2002, Chrom neben Silizium, SiO₂ und anderen Nichtleitern als Träger für Eisen-Nanopartikel als Katalysator. Ein Chrom-Substrat erwies sich jedoch gegenüber einem solchen aus z.B. Si unterlegen. Shimoi, N. and Tanaka, S.i.: beschreiben in "Enhancement of electron field emission from carbon nanofiber bundles separately grown on Ni catalyst in Ni-Cr alloy" Carbon, vol. 47(5), pp. 1258-1263, 2009 das Wachstum von CNTs auf Nickel als Katalysator. Wenn die Schicht, aus der die CNTs herauswuchsen, aus einer NickelChrom-Legierung mit 57% Nickel bestand, die durch Cosputtern von Nickel-Pellets auf eine Chromplatte erhalten worden war, entstanden separate Bereiche aus Nickel, auf denen Bündel von CNTs wuchsen, während auf den zwischenliegenden Bereichen aus Chrom keine CNTs wuchsen. Auf diese Weise ließen sich CNT-Bündel mit kontrollierten Abständen dazwischen erzeugen. Die Spitzen der einzelnen CNTs enthielten Nickel. Hinsichtlich der Rolle von Chrom bei der Erzeugung von CNTs mit Hilfe von CVD-Verfahren gibt es gegensätzliche Ansichten. So benutzten Park, Y.J.; Han, I.T.; Kim, H.J.; Woo, Y.S.; Lee, N.S.; Jin, Y.W.; Jung, J.E.; Choi, J.H. et al. eine katalytische Schicht einer Ni/Fe/Co-Legierung und fanden, dass auf dieser Legierung keine CNTs wuchsen, wenn darunter eine Chromschicht vorhanden war, die als Kathode diente. In die Legierung eindiffundierendes Chrom senkte die katalytische Aktivität, siehe "Effect of Catalytic Layer Thickness on Growth and Field Emission Characteristics of Carbon Nanotubes Synthesized at Low Temperatures Using Thermal Chemical Vapor Deposition" Jpn J Appl Phys, vol. 41 (Part 1, No. 7A), pp. 4679, 2002. Ähnliche Beobachtungen machten Yoo, H.S.; Park, C.H.; Yun, S.J.; Joo, S.K.; Hwang, N.M.: "Effect of Base Layers beneath Ni Catalyst on the Growth of Carbon Nanofibers Using Plasma Enhanced Chemical Vapor Deposition" Jpn J Appl Phys, vol. 47(4), pp. 2306, 2008. Einer anderen Gruppe gelang das Erzeugen von mehrwandigen CNTs (multiwalled carbon nanotubes, MWNTs) auf einem Mehrschichtkatalysator, für den Al mit 10 nm Dicke, Cr mit 2 nm Dicke und Co mit 2 nm Dicke auf ein Substrat gesputtert wurden (Cheng, H.C.; Lin, K.C.; Tai, H.C.; Juan, C.P.; Lai, R.L.; Liu, Y.S.; Chen, H.W.; Syu, Y.Y.: "Growth and Field Emission Characteristics of Carbon Nanotubes Using Co/Cr/Al Multilayer Catalyst" Jpn J Appl Phys, vol. 46(7A), pp. 4359, 2007). Lee, C.J.; Park, J.; Kim, J.M.; Huh, Y.; Lee, J.Y.; No, K.S. beschreiben in "Low-temperature growth of carbon nanotubes by thermal chemical vapor deposition using Pd, Cr, and Pt as co-catalyst" Chemical Physics Letters, vol. 327(5-6), pp. 277-283, 2000 die Verwendung von Co-Ni Teilchen als Nukleationskeime für das Wachstum von CNTs, wobei Pd, Cr oder Pt als Co-Katalysatoren gewählt wurden, um die Wachstumstemperatur zu senken. Die SEM- Abbildungen zeigen allerdings kein gerichtetes, paralleles orthogonales Wachstum der CNTs. Nach jüngeren Erkenntnissen lasse sich die Katalysatoren für die Synthese von CNTs in drei Klassen einteilen:
1. Ideale Katalysatoren sind Metalle mit wenigen Fehlstellen im D-Orbital, die eine gewisse C-Löslichkeit aufweisen aber gleichzeitig weniger stark zur Carbidbildung neigen. Dies sind z.B. Co, Ni, Fe, siehe Esconjauregui, Santiago, Whelan, Caroline M., and Maex, Karen: "The reasons why metals catalyze the nucleation and growth of carbon nanotubes and other carbon nanomorphologies" Carbon, vol. 47(3), pp. 659-669, 2009
2. Schlechte Katalysatoren sind Metalle mit vielen Fehlstellen im D-Orbital, die einen starken Hang zur Carbidbildung haben - z.B. Ti oder Ta, siehe Esconjauregui et al., a.a.O.
3. Andere Metalle, die keine Fehlstellen im D-Orbital haben, weisen keine C-Löslichkeit auf und zeigen im Allgemeinen kein CNT-Wachstum (z.B. Cu, Ag, Au), siehe S. Esconjaurequi et al., a.a.O. Sobald aber Katalysatornanopartikel mit sehr kleinem Durchmesser vorliegen (< ~3 nm), dominieren Oberflächeneffekte, und eine Vielzahl von Metallen, die sonst nicht geeignet wären, können CNT-Wachstum bewirken, (siehe Takagi, D.; Homma, Y.; Hibino, H.; Suzuki, S.; Kobayashi, Y.: "Single-Walled Carbon Nanötube Growth from Highly Activated Metal Nanoparticles" Nano Lett, vol. 6(12), pp. 2642-2645, 2006). Bei hinreichend kleinen Katalysatornanopartikeln wird vereinzelt auch bei nicht-metallischen Nanopartiklen die Katalyse von CNTs beobachtet, wie z.B. SiO₂-Nanopartikel., siehe Liu, B.; Ren, W.; Gao, L.; Li, S.; Pei, S.; Liu, C.; Jiang, C.; Cheng, H. M.: "Metal-Catalyst-Free Growth of Single-Walled Carbon Nanotubes" Journal of the American Chemical Society, vol. 131(6), pp. 2082-2083, 2009.

US 2008/0131352 A1 beschreibt die Herstellung von vertikal aus einer Unterlage herauswachsenden CNTs, deren Spitzen untereinander durch eine Deckschicht verbunden sind. Diese besteht aus einem Kohlenstoff-Netzwerk. In einer Veröffentlichung der Arbeitsgruppe des Erfinders, Kondo, D.; Sato, S.; Awano, Y.: "Self-organization of Novel Carbon Composite Structure: Graphene Multi-Layers Combined Perpendicularly with Aligned Carbon Nanotubes" Appl Phys Express, vol. 1 (7), pp. 074003, werden sowohl das Herstellungsverfahren als auch das Produkt näher beschrieben: Auf einem Siliziumsubstrat mit einer 300 nm dicken SiO₂-Schich wurde eine TiN-Schicht von 5 nm abgeschieden. Darauf wurde eine Cobalt-Schicht als Katalysator aufgebracht, die gemäß dieser Druckschrift zwischen 2,1 und 3,6 nm dick war, während US 2008/0131352 A1 eine Obergrenze für die Ni-Schicht von 2 nm nennt. Eine CVD-Abscheidung von Kohlenstoff unter Verwendung einer Gasmischung aus Acetylen und Argon im Verhältnis 1:9 führte zum Wachstum von CNTs, deren Spitzen durch eine Graphit- oder Graphenschicht miteinander verbunden sind, deren Netzebenen senkrecht zu den darunter liegenden Wänden (den Wänden der CNTs) ausgerichtet sind. In die Deckschicht sind Katalysatorpartikel eingebettet, die man auch schon bisher in den Spitzen der auf Katalysator gewachsenen CNTs fand. Die Autoren nehmen an, dass sich im Verlauf der Bildung dieser Struktur zuerst eine Graphen-Mehrfachschicht abscheidet. Daraufhin würde sich das bis dahin schichtförmige Cobalt in Partikel umwandeln. Daraus würden sind MWNT-Bündel durch "tip growth", also das Wachstum von der Spitze her nach unten, entwickeln, wodurch die Graphenschicht und die Cobaltpartikel nach oben gehoben würden. Da mit einer Cobalt-Schicht von nur 1 nm zwar das Wachstum von CNTs, aber ohne Graphenschicht, beobachtet wurde, nehmen die Autoren an, dass es essentiell sei, dass zu Beginn des Wachstumsprozesses eine Teilchenbildung des Katalysators unterbunden werden müsse

Diese Struktur wurde für die Herstellung von Via-Interconnects und als thermische Ableitschicht vorgeschlagen. Die Erzeugung von CNT-Vias konnte in US 2008/0131352 A1 konkret gezeigt werden. Da Graphit und Graphen stark anisotrope physikalische Eigenschaften haben, ist davon auszugehen, dass senkrecht zur Graphit- bzw. den Graphenschichten nur eine schlechte elektrische/thermische Leitfähigkeit vorliegt (im Vergleich zur lateralen Leitfähigkeit); dies bestätigt sich zumindest für die elektrische Leitfähigkeit durch die Widerstandsmessung bei einem Via von 2 µm Durchmesser: Hier betrug der Widerstand 13 Ω. Zwar mag sich daraus schließen lassen, dass die Spitzen der CNTs physisch mit der Graphenschicht verbunden sind; nimmt man aus der Literatur bekannte CNT-Dichten an, so ist der Widerstand jedoch sogar höher als theoretisch möglich (ca.10 mal zu hoch). Ein solcher Widerstand ist daher nicht annähernd ausreichend, um eine reelle elektrische Kontaktierung zwischen den CNTs und der Deckschicht annehmen oder gar für Anwendungen nutzen zu können. Außerdem ist der Widerstand ca. 1000 mal höher als in einem ein vergleichbaren Kupfer-Via, was möglicherweise mit einer zu geringen CNT-Dichte begründet werden kann. Eine nachträglich aufgebrachte Metällleitbahn, wie sie in der Herstellung von CNT/Metall-Hybrid-Leitbahnsystemen notwendig ist, sollte sich dementsprechend nicht optimal mit den CNTs kontaktieren lassen.

Gemäß WO2010/087903 A1 wird ein beispielsweise kohlenstoffhalfiges Substrat zuerst mit einer Katalysator-Schicht (in der Regel eine diskontinuierliche Schicht) und sodann mit einer isolierenden Schicht, beispielsweise aus Al₂O₃, belegt. Wenn zur Aktivierung des Katalysators das beschichtete Substrat in einer reduzierenden Atmosphäre erhitzt wird, bricht die isolierende Schicht in Einzelteile, wodurch Katalysator der reduzierenden Atmosphäre ausgesetzt wird. In Reaktion hierauf wachsen die Kohlenstoff-Nanoröhren zwischen dem Substrat und der zerbrochenen Isolierungsschicht 103. Sie heben dabei die Isolierungs-Bruchstücke an, die den Katalysator mit sich nehmen.

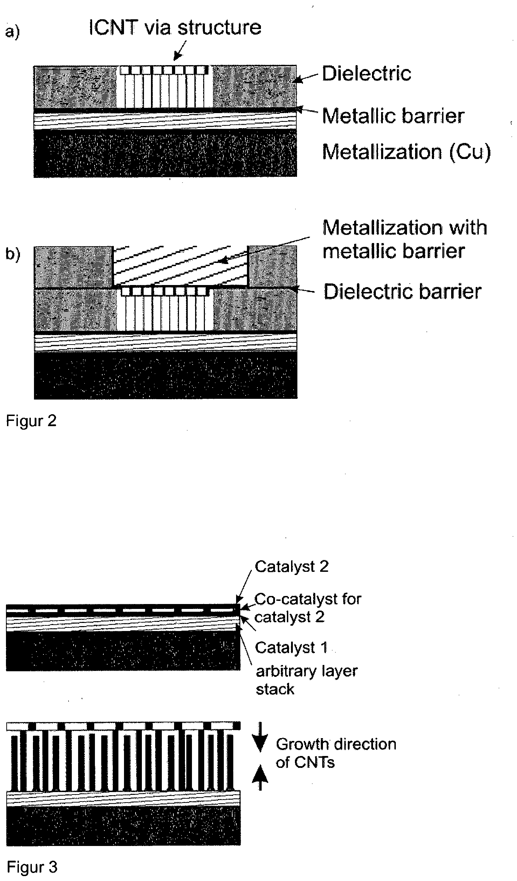

A. Matur et al. in Current Applied Physics 10, 407-410 (2010) beschreibt die Verwendung einer ultradünnen Eisen-Schicht als Katalysator für das Wachstum von Kohlenstoff-Nanoröhren. Beim Erhitzen bildeten sich inselförmige Katalysator-Strukturen, siehe Figur 3. Chih Ming Hsu et al. in Thin Solid Films 471, 140-144 (2005) untersuchten das Wachstum von CNTs auf Silizium-Wafern, die entweder eine Barriereschicht aus Titan oder eine Siliciumdioxid-Schicht in Kombination mit Cobalt als Katalysator aufwiesen. Bei der Verwendung von Siliciumdioxid wurde ein Spitzenwachstum der CNTs beobachtet, wobei die CNTs abschließend mit einer dünnen Deckschicht bedeckt waren, in die Nanoteilchen eingebettet waren. Die Struktur auf den Spitzen der CNTs bestand aus einem Kohlenstoff-Film, der von katalytischen Teilchen umgeben war.

Die Druckschriften US 2002/0163079 A1 und US 7,094,692 B2 beschäftigen sich mit CNTs, die sich als Vias oder Leiter eignen. Gemäß US 2002/0163079 A1 wird Cobalt, Nickel oder Eisen als Katalysator verwendet; nach dem Wachstum der Kohlenstoffnanoröhrchen findet man den Katalysator am gewachsenen Ende der Nanoröhren, das heißt an der Spitze, sofern es sich um Spitzenwachstum handelt. Dabei befand sich der Katalysator hier innerhalb einer jeden Nanoröhre, die an ihrem Ende mit einer Kohlenstoff-Struktur verschlossen war, siehe Absatz [77]. Gemäß US 7,094,692 B1 wird Nickel, Eisen, Cobalt oder Palladium als Katalysator eingesetzt; die Katalysatorschicht aggregiert teilchenförmig, und die Kohlenstoffnanoröhren wachsen, wobei sich die Katalysator-Teilchen als Nuclei des Wachstums erweisen. Im Falle von Spitzen-Wachstum findet sich der Katalysator dementsprechend teilchenförmig fixiert an den Spitzen der einzelnen Kohlenstoff-Nanoröhren.

US 2008/0131352 A1 beschäftigt sich ebenfalls mit leitenden Strukturen, die aus KohlenstoffRöhren aufgebaut sind. Gemäß Beispiel 1 ist teilchenförmiger Katalysator zwischen den CNT-Teilen und deren - ebenfalls aus Kohlenstoff bestehenden - Endteilen angeordnet.

WO 2005/102922 A1 offenbart ein Schichtsystem aus Kohlenstoff-Nanoröhren, das sich zwischen einem Substrat und einer Deckschicht befindet. Es kann dadurch hergestellt werden, dass auf einem nicht-katalytischen Substrat eine Katalysatorschicht aus z.B. Nickel, Eisen oder Cobalt und darauf eine das Wachstum von CNTs nicht katalysierende Schicht aus Metall aufgebracht und das Konstrukt mit einem Plasma beaufschlagt wird, das sich zur Bildung von Kohlenstoff-Nanoröhren eignet. Diese wachsen zwischen der Katalysatorschicht und der nicht katalysierenden Metallschicht, die dabei angehoben wird. Als Materialbeispiele für die nicht katalysierende Metallschicht sind Kupfer und Gold angegeben.

Die Aufgabe der vorliegenden Erfindung liegt darin, eine Struktur aus einer Deckschicht mit darunterliegenden CNTs bereitzustellen, die die Nachteile des Standes der Technik zumindest teilweise vermeidet, indem ein thermischer und elektrischer Kontakt zwischen den CNTs und der Deckschicht besteht, so dass über eine elektrische Ankontaktierung der Deckschicht ein thermischer und elektrischer Kontakt zur Basis der CNTs besteht. Mit einer solchen Struktur sollen sich vertikale Leitbahnverbindungen sowie andere, vorwiegend mikro- und nanoelektronische Anwendungen realisieren lassen.

Gelöst wird die Aufgabe durch die Bereitstellung eines Schichtsystems, umfassend eine Schicht aus parallel zueinander ausgerichteten Kohlenstoffnanoröhren und eine darauf aufliegende Deckschicht mit metallischen Eigenschaften.

Dieses Schichtsystem konnte überraschend durch die Verwendung einer Katalysatorschicht erhalten werden, die sich von bisherigen Katalysatoren durch das Vorhandensein eines Strukturierungsmaterials unterscheidet, was nachstehend näher erläutert werden wird.

Die Deckschicht besteht zumindest in großen Teilen und vorzugsweise vollständig aus Material des verwendeten Strukturierungsmaterials, nämlich einem selbst nicht eigenständig als Katalysator wirkenden Metall, insbesondere Chrom, mit darin eingebetteten oder einlegierten Partikeln des verwendeten Katalysatorsystems, insbesondere Nickel oder Cobalt. Sie besitzt deshalb sowohl hinsichtlich der elektrischen als auch der thermischen Leitfähigkeit metallische Eigenschaften. Sie wirkt wie eine Schutzschicht, was zum einen die Durchführung verschiedener nasschemischer Ätzprozesse erlaubt. Zum anderen sind plasmabasierte trockenchemische als auch physikalische Ätzprozesse möglich, ohne die CNTs direkt einem lonenbombardement auszusetzen, was mit einer Kohlenstoff-basierten, wesentlich empfindlicheren Deckschicht kaum realisierbar ist. Eine derartige Resistenz ist z.B. bei Damascene-Prozessen, wie sie zum Herstellen komplexer Schaltkreise erforderlich sind, von großem technologischem Vorteil. Dabei kann man die Deckschicht z.B. auch als Ätzstop nutzen. Die Schicht ist vorzugsweise vollständig geschlossen. Da die Deckschicht in unmittelbarem Kontakt mit den Spitzen der CNTs steht, indem deren Spitzen bis in sie hineinragen, ist auch eine gute mechanische Stabilität gegeben. Aufgrund der physischen Verbindung der CNTs mit der Deckschicht sind die CNTs mit dieser sowie untereinander elektrisch und thermisch verbunden.

Das Schichtsystem kann eine Basisschicht und/oder ein Substrat aufweisen, z.B. eine metallische Schicht, eine dielektrische Schicht oder eine nichtmetallische, isolierende Schicht, beispielsweise aus Silizium, Siliciumdioxid, Tantalnitrid oder dergleichen. Die Basis- und die Deckschicht liegen in der Regel im Wesentlichen parallel zueinander, können jedoch auch einen Winkel zwischen sich einschließen, wenn sich die Länge der CNTs über die Ebene der Basisschicht bzw. des Substrats hinweg kontrolliert ändert (ansteigt bzw. sinkt).

Die Ausrichtung der CNTs wird primär durch die Lage des Untergrundes vorgegeben. In der Regel wachsen die CNTs vertikal aus der darunter- bzw. der darüber liegenden Schicht; bei geschicktem Untergrundaufbau und selektiver Bedeckung mit Katalysator kann man dabei auch scheinbar winklig gegenüber der Hauptachse des Substrats wachsende CNTs erhalten.

Da das erfindungsgemäße Schichtsystem ausgehend von einer Katalysator enthaltenden Beschichtung auf dieser Basisschicht oder diesem Substrat hergestellt ist, ist diese/dieses grundsätzlich erst einmal vorhanden; es kann jedoch bei Bedarf gegebenenfalls entfernt werden, beispielsweise durch Abätzen.

Die Dichte der CNTs ist hoch; je nach Zusammensetzung des Schichtsystems (Schichtdicken) und Durchmesser der CNTs liegt sie vorzugsweise im Bereich von 5 x 10⁹ bis 5 x 10¹²/cm².

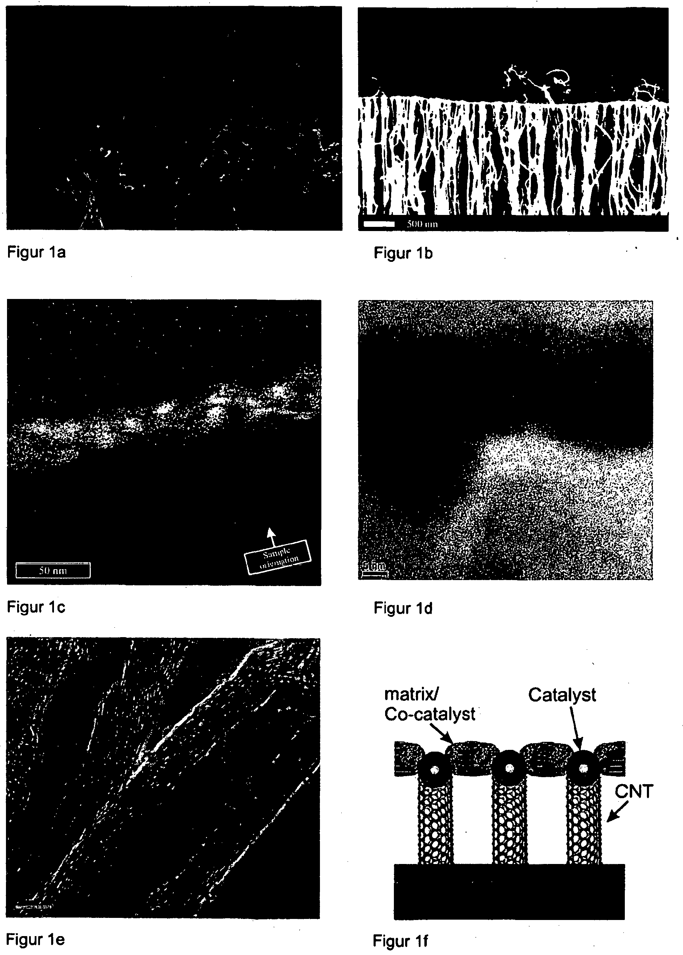

Die Erfindung wird durch die beigefügten Figuren näher erläutert, worin
- Figur 1 den Schichtaufbau der ICNT-Nanostruktur mit einem Substrat auf der Unterseite, den vertikal gerichteten CNTs darauf und einer dünnen und geschlossenen Cr/Ni- oder Cr/Co-Schicht auf der Oberseite zeigt: (Fig. 1 a); Fig. 1b zeigt eine Vergrößerung der Oberseite; Fig. 1c eine TEM-Aufnahme der mehrwandigen CNTs; Fig. 1d ist ein TEM-Querschnitt der Cr/Ni-Schicht; Fig. 1e ist ein TEM-Querschnitt im EELS-Modus der Cr/Ni-Schicht und zeigt die Verteilung der Elemente (Cr - der hell erscheinende Mittelstreifen und Ni - der obere, leicht "gepunktet" wirkende Bereich); Fig. 1f ist ein postuliertes Wachstumsmodell;
- Figur 2 zeigt das strukturierte Wachstum von ICNTs in Via-Löchern mit präziser Einstellung der CNT-Höhe (a) und Formierung der nächsten Leitbahnebene (b);
- Figur 3 zeigt ein Mehrschichtkatalysatorsystem zur Erzeugung von ineinander gewachsenen CNTs;
- Figur 4 zeigt den SEM-Querschnitt von zwei ineinander gewachsenen CNT-Schichten, erzeugt mit einem Si/SiO₂/Ni/Cr/Ni-Aufbau, anhand erster Versuche; die Qualität der Schichten lässt sich durch geeignete Variation der eingesetzten Prozessbedingungen noch deutlich verbessern;
- Figur 5 zeigt Beispiele für Nanostrukturen, die auf Basis der ICNT-Schicht erzeugt werden können: eine ICNT-Schicht mit Schichtstapel (a) und eine ICNT-Schicht mit zusätzlicher CNT-Schicht auf dem Schichtstapel (b), jeweils schematisch dargestellt. Im REM-Querschnittsbild erster Versuche (c), (die Qualität der Schichten lässt sich durch geeignete Variation der eingesetzten Prozessbedingungen noch deutlich verbessern) sind die einzelnen Strukturen deutlich erkennbar;
- Figur 6 zeigt ein Ausführungsbeispiel in Form eines Drucksensors auf Basis der ICNT-Struktur, der eine gasartunabhängige Druckmessung mittels Feldemission ermöglicht.
- Figur 7 zeigt eine Superkapazität, die durch einen Schichtstapel, bestehend aus ICNT-Schicht, zwei voneinander isolierten Metallisierungsschichten, Verspannungsschichten (z.B.Al₂O₃ und SiO₂) und einer zusätzlichen Schicht CNTs, realisiert ist. Das Aufrollen erfolgt durch Freilegung des Schichtstapels und Entspannung des Schichtstapels nach dem Stand der Technik.

Die Herstellung des erfindungsgemäßen Schichtsystems erfolgt mit Hilfe eines speziell strukturierten Katalysatorsystems. Das Katalysatorsystem wird auf der Basisschicht bzw. dem Substrat aufgebracht und bei dem Herstellungsvorgang vollständig von deren/dessen Oberfläche abgehoben und von den CNTs getragen. Auf Basis der dabei erhaltenen Struktur ergeben sich vor allem neue und verbesserte Integrationsmethoden von CNTs in elektronische und sensorische Anwendungen. Darunter fallen die Realisierung von CNT-Leitbahnen in ULSI-Schaltkreisen, Wärmeableitstrukturen für jegliche Hochleistungsbauelemente, mechanisch funktionale Schichten, Superkondensatoren, optische Sensoren, elektro-mechanische Sensoren, Spinelektronik und Aktoren.

Den Erfindern ist es erstmals gelungen, eine neue Nanostruktur zu entwickeln, bei der vertikal wachsende Kohlenstoffnanoröhren in einem thermischen CVD-Prozess ein vollständig metallisches Schichtsystem im Verbund vom Substrat abheben. Die Besonderheit liegt darin, dass dieses Schichtsystem als in der Regel geschlossene und sehr glatte Schicht von den CNTs getragen wird (siehe Fig. 1a und b). Die Schicht auf den CNTs weist eine geringe Rauigkeit auf, so dass diese metallisch glänzend erscheint. Die Rauigkeit wurde mit < 5 nm (RMS) bestimmt. Dies unterscheidet sich deutlich vom typischen matt-schwarzen Erscheinungsbild von CNT-Schichten. Die Wachstumsart kann dem "tip"-Wachstumsmodus untergeordnet werden. Aufgrund der Schichtstruktur wird dieses spezielle Wachstum hier als Zwischenschichtwachstum von CNTs (Interlayer-Wachstum; ICNTs) definiert. Strukturelle Analysen der Schicht, die mit den Katalysatorsystemen Ni bzw. Co und dem Strukturierungsmaterial Chrom durchgeführt wurden, deuten auf eine Phasentrennung zwischen den beiden Komponenten hin, die von der Katalysatorvorbehandlung bis zum Ende des CNT-Wachstums erhalten bleibt (siehe Fig. 1 c und d). Die CNTs wachsen in Form von gegebenenfalls einwandigen, in der Regel jedoch mehrwandigen CNTs (MWCNTs oder MWNTs) aus der Unterseite heraus (siehe Fig. 1e). Auf Grundlage umfangreicher Analysen wurde eine Schichtstruktur abgeleitet, die schematisch in Fig. 1f dargestellt ist. Die CNTs sind geprägt durch eine hohe Qualität (Defektarmut), eine im Wesentlichen senkrechte Ausrichtung und lange Segmente mit sehr gut ausgeprägter Schalenstruktur, was sich auch in besonders geraden CNTs äußert. Außerdem liegen nur geringfügige metallische Einschlüsse in den CNTs vor. Im Vergleich zu CNTs, die im "root"-Wachstum erzeugt wurden, weisen die ICNTs der vorliegenden Erfindung eine geringere Defektdichte auf: Im direkten Vergleich zu einem Referenzprozess, bei dem "normale" CNTs auf einer Si/SiO₂(100nm)/Ta(10nm)/Ni(2,1nm) wuchsen, wurde eine bis zu 30% geringere Defektdichte festgestellt (gemessen am D/G-Peakverhältnis des Ramanspektrums).

Obwohl die Erfinder nicht an eine theoretische Erklärung der Wachstumsvorgänge gebunden sein wollen, deutet sich an, dass die Struktur der CNTs mit der speziellen Wachstumsart in Verbindung gebracht werden kann. Zum einen ermöglicht die ICNT-Struktur eine dosierte Zufuhr von Kohlenstoff über den Katalysator. Zum anderen sind die Wachstumsbedingungen während des Wachstumsprozesses nahezu konstant. Letzteres hat vor allem Vorteile für das Wachstum von langen und dichten CNT-Schichten, denn dort ist die schichtdicken- und strukturabhängige Gasdiffusion nicht relevant. Im Weiteren dürfte das Strukturierungsmaterial eine wichtige Rolle spielen. Dies ist eine weitere Besonderheit dieser Nanostruktur. Normalerweise bewirken Katalysatorsysteme mit Co-Katalysatoren ein "root":-Wachstum. Dies erfordert aufwändige Schichtsysteme, die zudem auf dem Substrat verbleiben und sich somit unter Umständen störend auf die spätere Applikation auswirken (z.B. den elektrischen Widerstand erhöhen). Dagegen wird das vorliegende Katalysatorsystem durch das Wachstum der CNTs vollständig von der Oberfläche des Substrates abgehoben. Eine nachträgliche Entfernung des Substrats von der CNT-Schicht ist daher ohne weiteres möglich (z.B. durch Ätzung oder CMP).

Als Substrat für das erfindungsgemäße Schichtsystem kann Silizium verwendet werden. An dessen Stelle kann auch jedes andere elektrisch leitfähige oder isolierende Substrat verwendet werden. Eine glatte Oberfläche ist günstig. Auf das Substrat kann bei Bedarf eine isolierende oder leitende Schicht als Basisschicht aufgebracht werden, die z.B. einer verbesserten Temperaturstabilität oder auch einer späteren Ankontaktierung dienen kann. Dabei ist die Schichtdicke nicht von Belang. Sie kann z.B. zwischen 20 nm und 2 µm, vorzugsweise zwischen 50 und 250 nm dick sein. Diese Schicht kann z.B. durch thermische Oxidation des Substrats (SiO₂) erzeugt oder mit einem CVD- oder PVD-Verfahren aufgebracht werden. Das Material dieser Schicht kann ein Oxid des Substratmaterials sein, z.B. SiO₂. SiO₂ bietet sich beispielsweise als Opferschicht an, wenn das erfindungsgemäße Schichtsystem später keine Basisschicht aufweisen soll, weil es sich wegätzen lässt. In einer Alternative können die Basisschicht oder das Substrat elektrisch leitend sein und vorzugweise metallische Eigenschaften haben. Beispiele sind elektrisch leitfähige und temperaturstabile Schichten aus TiN, TaN, Ti, Ta, Pd, W, insbesondere für die Basisschicht, oder dergleichen, die sich beispielsweise als Bestandteil für die Realisierung von Leiterbahnen, z.B. in Form von Vias, anbieten. Das Substrat kann selbstverständlich seinerseits strukturiert oder mit Dotierungen versehen sein. Sofern eine Basisschicht vorhanden ist, können beliebige weitere Schichten unter der Basisschicht vorhanden sein, die der Fachmann anhand des vorgesehenen Verwendungszwecks des erfindungsgemäßen Schichtsystems gemäß dem Stand der Technik auszuwählen in der Lage ist.

Auf dem Substrat oder der Basisschicht kann eine Haftschicht angeordnet sein, die vorzugsweise aus Tantal besteht.

Auf diesem Untergrund, sei es das Substrat oder die Basisschicht, wird eine strukturierte Schicht erzeugt. Hierfür muss ein Strukturierungsmaterial zusammen mit einem Katalysatormaterial in eine Schichtform gebracht werden, bei der die beiden Materialphasen in der lateralen Ebene auf dem Substrat zumindest teilweise nebeneinander vorliegen.

Die strukturierte Schicht umfasst oder besteht aus einer ersten Phase, die aus einem Metall besteht, das keine eigenständige katalytische Aktivität hinsichtlich des Entstehens von CNTs aus der Gasphase aufweist, sowie einer zweiten Phase aus einem Metall, das die Entstehung von CNTs aus der Gasphase katalysiert. Als Katalysator können, wie bereits oben erwähnt, Cobalt oder Nickel dienen, gegebenenfalls aber statt dessen Eisen oder eine Legierung dieser Materialien oder ein anderes Material, dessen Eignung für die Bildung von CNTs in Gasabscheideverfahren bekannt ist. In diesem Zusammenhang sei auf die oben zitierten Veröffentlichungen von S. Esconjauregui et al., D. Takagi et al. und B. Liu et al. verwiesen. Als Beispiele seien Ruthenium, Silber und Gold genannt, wobei Silber und Goldpartikel nur dann katalytisch wirken, wenn sie sehr klein sind, da ihre katalytische Wirkung ein Effekt von besonderen physikalisch/chemischen Eigenschaften bei Nanopartikel mit extrem kleinen Durchmesser ist. Das Material der ersten Phase wird vorliegend auch als Strukturierungsmaterial bezeichnet; es besitzt in der strukturierten Schicht eine ungleichmäßig dicke und/oder gefaltete, gegebenenfalls mit Poren durchsetzte Struktur, während sich die zweite Phase in Vertiefungen und/oder Poren der ersten Phase befindet derart, dass beide Materialphasen in der lateralen Ebene zumindest teilweise nebeneinander vorliegen.

Um diese strukturierte Schicht zu erzeugen, wird als Strukturierungsmaterial auf die Untergrundschicht zuerst eine Schicht aus dem Metall aufgebracht, das in der aufgebrachten Form keine eigenständige Katalysatorfunktion für die Bildung von CNTs besitzen darf. Es muss ausgeschlossen sein, dass dieses Material als Keim für das CNT-Wachstum dient. Es hat gegebenenfalls eine co-katalytische Wirkung. Darunter ist zu verstehen, dass dieses Material die für die Freisetzung des Kohlenstoffs an der Festkörper-G'renzfläche benötigte Aktivierungsenergie herabsetzt, ohne aber eigenständig das Wachstum von CNTs katalysieren zu können. Die Erfinder nehmen aber an, dass vor allem die Struktur, die dieses Material aufgrund späterer Verfahrensschritte annimmt, von Bedeutung ist, und zwar möglicherweise als stabilisierende Matrix. Dieses Material wird z.B. mittels PVD aufgebracht; alternative Abscheidungstechniken wie z.B. Elektronenstrahlverdampfen oder Atomlagenabscheidung (ALD) sind möglich. Die Schichtdicke sollte in der Regel im nm-Bereich liegen und wird vorzugsweise zwischen etwa 3 bis 15 nm, stärker bevorzugt zwischen etwa 5 oder 6 und 15 nm gewählt. Zumindest bei Chrom als Strukturierungsmaterial haben die Erfinder nämlich festgestellt, dass man dann, wenn die Schichtdicke wesentlich unter 3 nm liegt, "normales" CNT-Wachstum beobachtet. Außerdem haben sie beobachtet, dass dann, wenn die Schichtdicke wesentlich über 15 nm liegt, keine CNTs gebildet werden.

Welches Metall oder welche Legierung verwendet werden kann, ist unter anderem vom Katalysator abhängig. Erlaubte Kombinationen können z.B. aus dem Phasendiagram abgeleitet werden. Unter der Voraussetzung der Verwendung von Nickel und/oder Cobalt als Katalysator ist ein Beispiel für ein verwendbares Strukturierungsmaterial Chrom; es kommen jeweils jedoch auch z.B. Molybdän oder Ruthenium oder Legierungen mit einem oder aus zweien oder allen dreien dieser Metalle in Frage, also z.B. die Kombinationen Co/Mo, Ni/Mo, Fe/Mo, Co/Ru, Ni/Ru oder Fe/Ru. Für die Verwendung anderer aus dem Stand der Technik bekannter Katalysatoren, wie sie einleitend aufgelistet sind, lassen sich aus dem Phasendiagramm weitere als Strukturierungsmaterial geeignete Materialien ableiten. Vorzugsweise sollte dabei das Kriterium erfüllt sein, dass bei den kombinierten Materialien eine Phasentrennung vorliegt oder sich im Laufe der Probenvorbehandlung einstellt. Demzufolge ist es wenig wahrscheinlich, dass bei Metallen, die bei den für die Erfindung verwendeten Prozesstemperaturen vollständig legieren, ICNT-Wachstum beobachtet werden können.

Die strukturierte Schicht kann zum einen aus einem gestapelten Schichtsystem erzeugt werden. Hierfür wird auf die flächig aufgebrachte Schicht aus Strukturierungsmaterial eine dünne Katalysatorschicht aufgebracht. Diese Schicht kann wie die Strukturierungsschicht durch Sputtern, Elektronstrahlverdampfen oder ALD abgeschieden werden. Die Schichtdicke sollte vorzugsweise im Bereich 1 bis 5 nm gewählt werden. Eine nachfolgende Behandlung bei Temperaturen oberhalb ca. 300°C in einer H₂-haltigen Atmosphäre (nachfolgend als "thermische Behandlung" bezeichnet) führt zu einer Agglomeration der beiden Schichten. AFM-Untersuchungen an Systemen mit einer Chrom-Schicht als Strukturierungsschicht zeigten ein faltenartiges Aufbrechen der Schicht. Die dadurch entstehenden "Mulden" dienen als Einlagerungsstellen für Nanopartikel aus dem Katalysatormaterial. Eine ähnliche Schichtstruktur kann auch durch Nanostrukturierung oder durch Selbstanordnung von Nanopartikeln bewirkt werden.

Die Katalysatorpartikel sollten in dieser Schichtstruktur eine adäquate mechanische Verbindung mit der umgebenden (Strukturierungs-)Mätrix aufweisen.

Durch geeignete Wahl der Prozessbedingüngen (Schichtzusammensetzung, Vorbehandlung, Gaszusammensetzung, Temperatur) kann sodann in einem thermischen CVD-Prozess die erfindungsgemäße Schichtstruktur erzeugt werden. Die für das Entstehen des erfindungsgemäßen Schichtverbunds erforderliche Zusammensetzung und Struktur der katalytischen Schicht wurde voranstehend beschrieben. Eine Vorbehandlung der Probe bei hohen Temperaturen in einer inerten oder reduzierenden Atmosphäre, z.B. bei ca. 500-700°C in N₂/H₂ Atmosphäre, ist günstig. Vorzugsweise schließt sich die Erzeugung der CNTs im selben Reaktor und möglichst unmittelbar anschließend an. Als Quelle für den Kohlenstoff der CNTs dient ein kohlenstoffhaltiges Gas, z.B. Methan, Ethylen oder Acetylen, das gegebenenfalls mit einem Inertgas verdünnt wird. Vorliegend wurde in der Regel Ethylen als Kohlenstoffquelle eingesetzt, vorzugsweise in einer Kombination mit H₂ und verdünnt mit Stickstoff. Wachstumstemperaturen im Bereich 570 bis 660°C führen zu guten Ergebnissen; jedoch lassen sich die ICNTs auch bei weit niedrigeren Temperaturen erhalten. Durch Einstellung der Prozesszeit kann die Dicke der CNT-Schicht mit hoher Präzision eingestellt werden. Experimentell konnte dies bereits in einem Bereich zwischen 1 und 5000 nm gezeigt werden. Es ist zu erwarten, dass z.B. bei einer Verlängerung der Behandlungsdauer und/oder einem höheren Partialdruck als dem in den bisherigen Herstellungsverfahren verwendeten die Dicke der CNT-Schicht noch weiter erhöht werden kann. Nach Abschluss des Schritts, bei dem die CNT-Zwischenschicht gebildet wird, findet man auf dieser eine geschlossene, metallische Schicht als Deckschicht. EDX-Querschnittsuntersuchungen zeigen im konkreten Fall der Verwendung der Kombination Chrom/Nickel eine nahezu vollständige Entfernung von Cr/Ni von der Basisschicht.

Die geschlossene metallische Deckschicht auf der CNT-Schicht im so erzeugten Schichtverbund erlaubt den Aufbau von verschiedenen Schichtsystemen auf den CNTs, die neuartige Technologien und Anwendungsmöglichkeiten eröffnen. So können z.B. auf die ICNT-Schicht eine oder mehrere zusätzliche Schichten abgeschieden werden. Mögliche Anwendungen sind:
- Vereinfachung und Verbesserung der Technologie für die Herstellung von CNT-Vias in ULSI-Schaltkreisen
- Erzeugung von superdichten CNT-Schichten durch multidirektionales CNT-Wachstum für Interconnect-Anwendungen, Wärmeleitschichten, Schichten mit höherer mechanischer Belastbarkeit
- Die ICNT-Struktur ermöglicht neue Integrationsmöglichkeiten von CNTs in elektronische Nanosysteme
- ICNT-Schichten mit verschiedenen funktionalen Zusatzschichten können für verschiedene Sensoren, wie Druck- und Berührungssensoren oder optische Sensoren verwendet werden.
- Einfache Realisierung von Mikrophonen mit erweitertem Frequenzbereich und hoher Empfindlichkeit
- Einfache Realisierung von Nanospalten unter größeren Flächen, durch nachträgliche Oxidation der CNTs
- Aufbau von einstellbaren optischen Filtern mit einfacher Technologie
- Aktoren in Form von MEMS oder NEMS (nanoelektromechanischen Systeme) mit hoher Präzision
- Erzeugung von neuartigen Nanostrukturen mit gestapelten CNT-Schichten, die für die Erzeugung von Superkapazitäten angewandt werden können

Eine besonders bevorzugte Anwendung der vorliegenden Erfindung liegt im Transfer von vertikalen CNTs auf beliebige Substrate, der infolge der spezifischen ICNT-Struktur der Erfindung möglich wird. Dazu folgendes:

Viele Applikationen erlauben keine Temperaturbelastung während der Herstellung von elektronischen Bauelementen und Sensoren. Dies betrifft vor allem Applikationen, die mindestens eine der folgenden Eigenschaften besitzen müssen:
- hohe mechanische Elastizität
- funktionelle Schichten bestehen aus organischen Komponenten (organische Halbleiter, Polymere etc.)
- Temperaturempfindliche Substrate, wie Kunstoffe oder Metalle mit niedrigem Schmelzpunkt
- Vermeidung von Materialinterdiffusion
Zu finden sind derartige Eigenschaften vor allem im Bereich hochintegrierter Schaltkreise (ASICs, MPUs, Datenspeicher etc.), der organischen Elektronik/Sensorik, der flexiblen Elektronik/Sensorik sowie bei "low-cost" Sensorik/Elektronik. Durch eine Integration von CNTs in Form von Trägern oder auch als funktionelle Elemente können in diesem Anwendungsfeld deutliche Verbesserung gemacht werden. Aufgrund des limitierten Temperaturbudgets (z.B. max. ~ 200 °C bei polymerbasierten Bauelementen, max.400°C bei hochintegrierten Schaltkreisen) bei der Herstellung solcher Bauelemente ist allerdings ein direktes Wachstum von qualitativ hochwertigen CNTs wegen der hohen Synthesetemperaturen im Allgemeinen ausgeschlossen. Für die CNT-Integration verbleiben in dem Fall lediglich Transfermethoden, wie z.B.:
- Abscheidung von CNT-Filmen in primär horizontaler CNT-Anordnung mit Tropfen-, Tauch-, oder Spincoating
- Dielektrophorese zur Abscheidung von CNTs aus Dispersionen in primär horizontaler Anordnung
- Einbettung von CNT-Schichten in horizontaler als auch vertikaler Anordnung in eine stabilisierende Matrix (Polymer, Epoxidharz etc.) mit anschließendem Transfer auf ein anderes Substrat

Die Methoden sind im Allgemeinen mit erheblichen Nachteilen verknüpft. So ist es z.B. schwierig, nach einem Transfer vertikale CNT-Arrays zu erhalten, in denen die CNTs nicht agglomerieren. Die hohe Oberfläche geht somit zum Teil verloren. Des Weiteren werden sie im Allgemeinen chemischen Behandlungen unterzogen, die Einfluss auf die CNT-Eigenschaften, vor allem aber die Eigenschaften der CNT-Oberfläche haben. Eine besonders große Schwierigkeit bereitet die elektrisch/thermische Ankontaktierung von CNTs. Beim Transfer von CNT-Schichten (unabhängig davon, ob vertikal oder verzweigt) ist die Ankontaktierungsschwierigkeit vor allem auf eine starke Variation in der CNT-Länge als auch auf undefinierte strukturelle Zustände an den CNT-Enden zurückzuführen (z.B. Schalen am CNT-Ende geschlossen).

Die CNT-Schichtstruktur der vorliegenden Erfindung bietet dagegen deutliche Vorteile beim Transfer von CNT-Schichten. Die geschlossene metallische Deckschicht auf dem CNT-Wald steht in direktem Kontakt mit den darunterliegenden CNTs und gewährleistet bereits nach der Schichtherstellung ein ideales mechanisches/thermisches/elektrisches Interface sowie eine schützende Schicht. Direktes Aufbringen von zusätzlichen funktionellen Schichten oder unterstützende Transferschichten sowie Haftungsvermittler sind ohne Interdiffusion mit der CNT-Schicht mit verschiedenen Methoden möglich. Die CNTs verbleiben also geschützt.

Ein Transfer kann auf einfachem Wege realisiert werden, indem die Deckschicht bzw. die oberste Schicht einer oder mehrerer auf die Deckschicht aufgebrachter Schichten des erfindungsgemäßen CNT-Schichtsystems (das sich in diesem Fall meist noch auf dem Substrat befindet, das als Ausgangsschicht für das Herstellen des erfindungsgemäßen Schichtsystems verwendet wurde) mit einem Substrat in Kontakt gebracht wird, das haftende Eigenschaften besitzt, beispielsweise ein Klebeband, ein Band aus Polydimethylsiloxan oder dergleichen oder ein anderes, vorzugsweise flexibles Substrat, das mit einem Kleber oder Haftvermittler (einem "adhesive") beschichtet ist oder inhärent haftende Eigenschaften besitzt. Beim Abziehen dieses Substrats lösen sich die CNTs vom ursprünglichen bzw. vorherigen Substrat. Wird ein doppelseitig haftendes Substrat verwendet, kann man das erfindungsgemäße Schichtsystem damit direkt am gewünschten Zielort befestigen. Gegebenenfalls lassen sich die nun "offen", d.h. ohne (Schutz)-Schicht angeordneten CNTs erneut mit einer oder mehreren Schichten versehen; alternativ können sie ihre Funktion auch in dieser Form ausüben, z.B. als besonders starker Absorber (schwarze Schicht).

Möglich ist auch ein kosteneffizienter Rolle-zu-Rolle Prozess, um CNT-Matten auf Folien im Industriemaßstab zu produzieren. Des Weiteren können die CNTs ohne zusätzliche aufwändige Prozesse großflächig kontaktiert werden. Damit ergeben sich einmalige Integrationsmöglichkeiten, die ein weites Anwendungsfeld zugänglich machen.

Die erfindungsgemäße Nanoschichtstruktur erlaubt vielfältige Anwendungen wie oben aufgelistet. Im Folgenden werden verschiedene Beispiele und technologische Ansätze vorgestellt. Das Verwendungsbeispiel 1 beschreibt die Herstellung von CNT-Vias. Die vorgestellte Struktur in Verwendungsbeispiel 2 ist ein neuartiger Ansatz, extrem dichte CNT-Schichten zu erzeugen, was für viele Anwendungen vor Vorteil sein könnte. Das Verwendungsbeispiel 3 dient der Darstellung der vielfältigen Möglichkeiten, auch komplexere Nanostrukturen mit begrenztem technologischem Aufwand zu erzeugen. Vor allem Sensoranwendungen könnten davon profitieren. Eine neue komplexe Nanostruktur wird in Verwendungsbeispiel 4 vorgestellt. Es handelt sich prinzipiell um einen Kondensator, der auf Grund der drei-dimensionalen Struktur Superkapazitäten ermöglicht. Es wird eine Technologie vorgestellt, diese Nanostruktur mit überschaubarem Aufwand herzustellen.

### Verwendungsbeispiel 1 - CNT Vias

Die ICNT-Struktur verspricht technologische Vorteile bei der Herstellung von vertikalen Leitbahnverbindungen (Vias) in vor allem komplexen integrierten Schaltkreisen (Mikroprozessoren und Speichermodulen). Bisherige Entwicklungen auf dem Gebiet der CNT-Vias zeigen große Probleme bei der Herstellung, große Kompatibilitätsschwierigkeiten mit CMOS-Prozessen sowie schlechte elektrische und thermische Eigenschaften derartiger Strukturen. Es besteht nach wie vor ein großer Bedarf an besseren Integrätionstechnologien, die industriellen Anforderungen gerecht werden. Bisherige Ansätze für die CNT-Integration in Vias erfordern eine aufwändige Prozedur zur Erzeugung des obersten Kontaktes. Die Kontakterzeugung wird im Allgemeinen durch eine Einbettung der CNTs mit einem Dielektrikum und einem CMP-Schritt erreicht, der die unregelmäßig gewachsenen CNTs einebnet und die CNT-Enden öffnet, um den elektrischen Kontakt zu verbessern. Danach erfolgt die Metallisierung. Diese Prozessabfolge weist allerdings Nachteile auf. Zum einen muss zwischen den CNTs eine homogene Füllung mit einem Dielektrikum erzielt werden. Dies ist technologisch ausgesprochen schwierig, vor allem dann, wenn der Anspruch einer lückenlosen Füllung sowie hoher Prozess- und Schaltkreiszuverlässigkeit besteht. Besonders kritisch wird bei dem CMP-Schritt die mechanische Belastung als auch das Eindringen von nasschemischen Bestandteilen in vorhandene Poren gesehen. Zum anderen sind mehrere aufwändige Prozessschritte notwendig, bis ein vollständiges CNT-Via erzeugt wird.

Mit der erfindungsgemäßen ICNT-Nanostruktur wird der Prozessablauf vereinfacht und verbessert. Figur 2 zeigt dazu wesentliche Zwischenschritte eines Prozessablaufs basierend auf dem "single-Damascene" Prozess (Liu, R.; Pai, C.S.; Martinez, E.: "Interconnect technology trend for microelectronics" Solid-State Electronics, vol. 43(6), pp. 1003-1009, 1999.). ICNT-Strukturen können selektiv in den Via-Löchern durch einen CVD-Prozess erzeugt werden. Die Selektivität kann durch eine Katalysatorvorstrukturierung mittels "Lift-off" Verfahren oder mittels abtragender Verfahren (z.B. CMP oder Ionenstrahlätzen) realisiert werden. Die für das Wachstum der ICNTs erforderliche Schicht aus Strukturierungs- und Katalysatormaterial wird dabei selektiv auf dem Boden des oder der Vias aufgebracht. Die Höhe der CNTs wird in dem CVD-Schritt durch die Prozesszeit präzise so eingestellt, dass die Deckschicht an die Oberseite der Struktur anschließt, in die das/die Via(s) eingebracht sind (Fig. 2a). Danach erfolgt die Abscheidung z.B. einer dielektrischen Barriere und des Dielektrikums der Leitbahnebene. Im Anschluss daran wird diese Ebene strukturiert, wobei die metallische Deckschicht der ICNT-Struktur als Ätzstop verwendet werden kann. Darauf folgen die Abscheidung einer dielektrischen Barriere, die Metallisierung der Leitbahnen (z.B. mit Cu) und eine Planarisierung z.B. mit einem CMP-Schritt (Fig. 2b). Entscheidende Vorteil dieser Technologie sind die präzise und gleichmäßige Einstellung der CNT-Höhe in Via-Strukturen, der Wegfall der Prozessschritte zur Füllung der CNT-Zwischenräume mit einer stabilisierenden Matrix und des CMP-Schrittes sowie die Verwendbarkeit der CNT-Deckschicht als Ätzstop für einen Trockenätzschritt, wobei die CNTs geschützt bleiben. Ein entscheidender Vorteil wird auch bei der elektrischen und thermischen Kontaktierung gesehen, denn alle Schalen der CNTs sind mit der Deckschicht direkt verbunden. Damit kann eine Metallisierung ohne weiteres auf die CNTs aufgebracht werden, und aufwändige Kontaktoptimierungsprozessschritte entfallen.

### Verwendungsbeispiel 2 - Methode zur Herstellung von extrem dichten CNT-Schichten

Die Kombination aus "root"-Wachstum und ICNT-Wachstum erlauben ein extrem dichtes Wachstum von CNTs. Durch die Verwendung eines Mehrschichtkatalysators und geeigneter Prozessparameter können zwei CNT-Schichten ineinander wachsen (Fig. 3 - links). Die Dichte der CNTs ist dabei höher als bei herkömmlichen Mehrschichtkatalysatoren, denn hier kann eine intensive Agglomeration von Katalysatornanopartikeln unterbunden werden, indem ein großer Teil der Katalysatoren durch das ICNT-Wachstum entfernt wird. Eine CNT-Schicht mit ineinander gewachsenen CNTs kann die Dichte von CNTs deutlich erhöhen, womit die effektive elektrische und thermische Leitfähigkeit verbessert werden kann.

Zur Realisierung wird zuerst eine Schicht aus Katalysatormaterial in der oben angegebenen Dicke auf das Substrat oder die Untergrundschicht aufgebracht. Anschließend erfolgt eine thermische Behandlung wie ebenfalls oben angegeben. Dies führt zur Formierung von Katalysatornanopartikeln. Auf die entstandene Schichtstruktur wird je eine Schicht des Strukturierungsrriaterials und des Katalysatormaterials in der oben angegebenen Dicke aufgebracht, und es folgt eine zweite thermische Behandlung wie angegeben. Die Erzeugung der CNTs erfolgt vorzugsweise im Reaktor, in dem auch die zweite thermische Behandlung erfolgte, und zwar ebenfalls bevorzugt zeitlich unmittelbar danach.

Die hohe effektive elektrische und thermische Leitfähigkeit solcherart hergestellter Strukturen kann in Anwendungen wie CNT-Vias oder thermischen Interfacematerialien zur effektiven Wärmeabfuhr bei Hochleistungsbauelementen besondere Vorteile bringen. Bei CNT-Vias ist die Dichte der CNTs eine der größten Herausforderungen. Mit dem Ansatz kann die Dichte signifikant erhöht werden. Außerdem ergeben sich weitere besondere mechanische Eigenschaften wie eine höhere Steifigkeit der CNT-Schicht. Daher kann diese Variante Anwendung in der Oberflächenmodifizierung von verschiedenen Bauteilen finden. Im Weiteren kann man derartig ineinander gewachsene CNTs als Nanoklettverschlüsse verwenden, die für viele neuartige mechanische, elektronische oder mechanisch/elektronische Anwendungen sinnvoll sind.

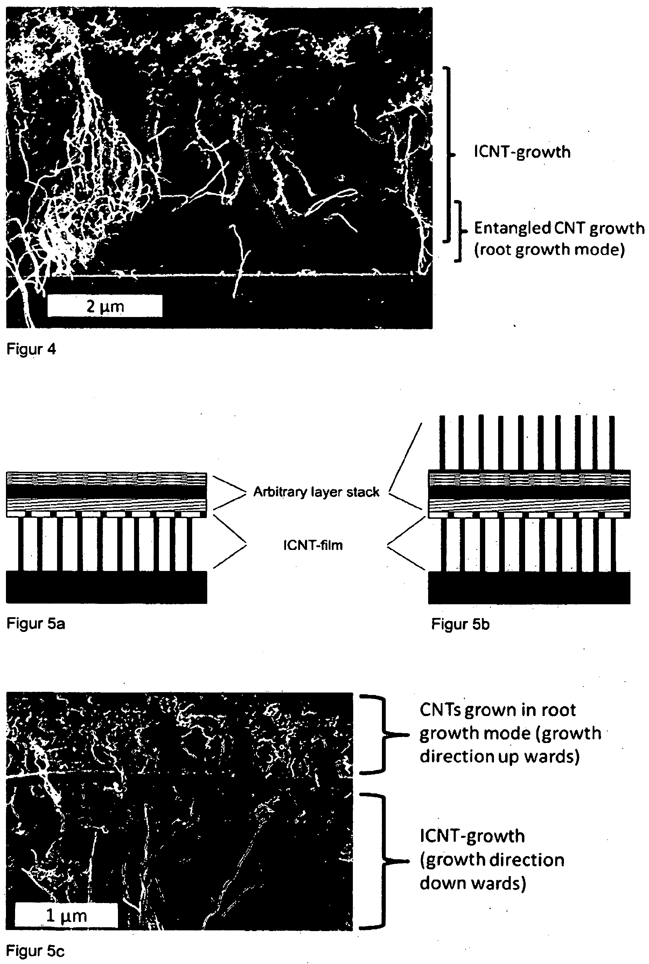

Eine Struktur mit CNTs, von denen ein Teil als ICNTs wie oben beschrieben, ein Teil im "root"-Modus gewachsen sind, ist in Fig. 4 gezeigt. Sie wurde mit einem Schichtaufbau aus Si/SiO₂-100nm/Ni-2,1 nm/Cr-10 nm/Ni-2,1 nm realisiert. Hierfür wurde die Probe nach dem Aufbringen der ersten Katalysatorschicht (Ni) zunächst einer Vorbehandlung bei 606 °C unter N₂/H₂ Bedingung unterzogen, um Ni-Nanopartikel auszubilden. Danach wurde die Probe mit der Nanopartikelschicht erneut einer Beschichtung mit Cr und danach mit Ni unterzogen. Im Anschluss daran wurde die Probe wiederum einer Vorbehandlung unter den genannten Bedingungen ausgesetzt. Direkt im Anschiuss erfolgte das CNT-Wachstum. Der Schichtquerschnitt bestätigt, dass zwei verschiedene Wachstumsarten vorliegen, die von verschiedenen Stellen im Probenaufbau ausgehen. Auf der Substratoberfläche (hier SiO₂) wird überwiegend ungerichtetes CNT-Wachstum beobachtet, ausgehend von der zuerst aufgebrachten Katalysatorschicht. Darüber wird ICNT-Wachstum beobachtet, ausgehend von der Cr- und der zweiten Ni-Schicht. An der Grenzfläche ist bereits ein Ineinanderwachsen der beiden CNT-Schichten zu erkennen. Dieses Ineinanderwachsen kann durch einen veränderten Schichtaufbau und Prozessoptimierung verbessert werden. Denn ein Ineinanderwachsen setzt vertikales und gerades Wachstum der CNTs auf beiden Seiten voraus. Hierfür kann auf der Substratseite kann z.B. die Schichtkombination Ta/Ni verwendet werden. Nach einer Vorbehandlung wie oben beschrieben führt dies zur Ausbildung von Ni-Katalysatornanopartikeln mit einer guten Haftung zum Untergrund (Ta). Dies ist Voraussetzung für ein senkrechtes Wachstum der CNTs. Nach dieser Vorbehandlung erfolgt die Abscheidung der Cr/Ni Schichten und der CNT-Prozess.

### Verwendungsbeispiel 3 - Methoden und Bespiele zur Erzeugung komplexer Strukturen sowie die Nutzung in Sensoren

Die ICNT-Struktur erlaubt den Aufbau von Schichtsystemen mit weiteren Strukturelementen, die verschiedene Funktionalitäten verleihen können. Aufgrund der geschlossen und glatten Deckschicht auf den CNTs können nahezu beliebige Schichtsysteme auf die ICNT-Schicht aufgebracht werden (z.B. durch PVD, CVD, ALD, Verdampfen, Spin-coating) ohne dass diese in die CNT-Schicht diffundieren (Fig. 5a). Derartige Schichtsysteme sind in der Konfiguration ICNT/Metall, ICNT/Metall/Isolator, ICNT/Isolator etc. realisierbar. Es sind aber auch Schichtkombinationen in Form von ICNT/Metall/Graphen oder ICNT/Metall/Graphit denkbar. Im Weiteren kann auf der Deckschicht eine weitere CNT-Schicht aufwachsen, die entweder wider als ICNT oder als CNT-Schicht mit nach oben freien Köhlenstoffnanoröhren ausgebildet ist, siehe Fig. 5b. Im ersten Fall muss auf der Deckschicht wiederum eine Schicht aus Strukturierungsmaterial und Katalysatormaterial wie oben für die Herstellung der erfindungsgemäßen Struktur beschrieben aufgebracht werden, oder die Deckschicht muss in diese Struktur überführt werden. Im Übrigen sind die Schichten frei wählbar derart, dass CNT-Strukturen wie aus dem Stand der Technik darauf wachsen. So kann z.B. eine zusätzliche Kontaktschicht (z.B. Ta) auf die ICNT-Schicht oder einem darauf befindlichen Schichtsystem aufgebracht werden. Nach Abscheidung eines Katalysators (z.B. Ni, Co, Fe) kann mit Hilfe eines zweiten CVD-Prozesses eine zusätzliche Schicht aus vertikalen CNTs erhalten werden. Fig. 5c zeigt eine derartige Mehrschicht-CNT-Struktur, bei der auf die ICNT-Schicht ein Schichtsystem, bestehend aus SiO₂/Ta/Ni, aufgebracht und danach einem zweiten CVD Prozess ausgesetzt wurde. Es entstand eine zusätzliche Schicht aus vertikal gerichteten CNTs.

Derartige weitergebildete Schichtsysteme eröffnen ein breites Anwendungsfeld. Eine Struktur wie in Fig. 5a dargestellt kann neben dem CNT-Via-Anwendungsfall für Flip-Chip Verbindungen, Sensoren und Aktoren verwendet werden. Die Anwendungsmöglichkeit von CNTs für Flip-Chip Anwendungen konnte bereits gezeigt werden, siehe Hermann, S.; Pahl, B.; Ecke, R.; Schulz, S. E.; Gessner, T.: "Carbon nanotubes for nanoscale low temperature flip chip connections" Microelectronic Engineering, vol. 87(3), pp. 438-442, 2010.
Mit der ICNT-Struktur können die elektrischen Eigenschaften deutlich verbessert werden, da ein formschlüssiger elektrischer Kontakt mit einer hochelastischen Schicht, die in der Kontaktzone metallisiert ist, erhalten werden kann.

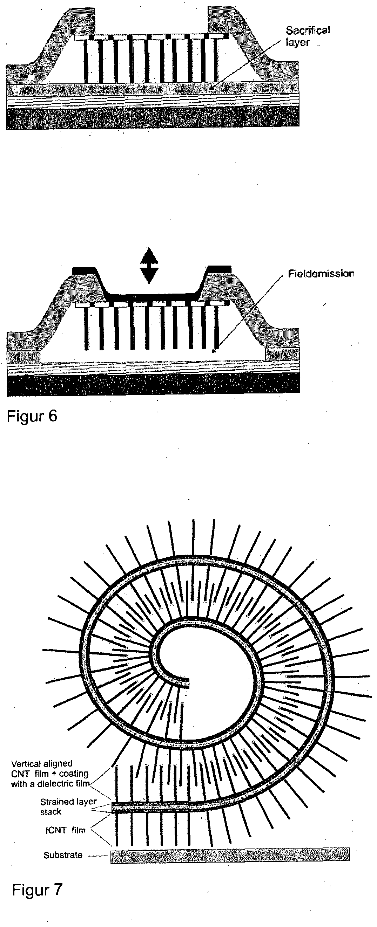

Hinsichtlich der Sensoren ist z.B. ein einfacher Drucksensor realisierbar. Für diese Ausführungsform wird eine Untergrundschicht aus z.B. SiO₂ vorgesehen, auf der das Katalysator-Strukturschichtsystem aufgebracht ist. Diese dient als Opferschicht und wird nach der Erzeugung der CNTs zumindest teilweise weggeätzt. Es sind zwei Varianten möglich:
A) Mit Hilfe der ICNT-Schicht kann ein Kondensator mit einseitig flexibler Membran erzeugt werden. Die ICNT-Schicht wird zunächst auf einem Substrat mit integrierter Metallisierung erzeugt. Danach werden Felder der ICNT-Schicht durch Strukturierungs-, Einbettungs- und Metallisierungsschritte in Rahmen eingebracht. Danach erfolgt die Entfernung der CNTs mit Hilfe von Plasma-aktiviertem O₂. Spaltäbstände können demzufolge nahezu beliebig durch die Dauer des CVD-Prozesses eingestellt werden (z.B.1 bis 5000 nm). Die Ausübung eines Druckes bewirkt eine Spaltänderung zwischen dem Substrat, in das eine isolierte Elektrode integriert ist, und der ICNT-Schicht. Über eine Kapazitätsänderung wird diese Auslenkung detektiert. Auf Basis einer derartigen Struktur können auch CNT-freie Spalte mit extrem geringer Spaltbreite erzeugt werden. Eine solche Variante bietet technologische Vorteile, denn eine Spalterzeugung ist auch auf größeren Flächen möglich.
B) Die Feldemission kann ebenfalls genutzt werden, um eine hochempfindliche Detektion von Deformationen und Bewegungen zu realisieren (Fig. 6). Die ICNT-Struktur bietet dafür besondere technologische Vorteile. Es können mit Hilfe von Opferschichten sehr geringe Spaltabstände für die Feldemission präzise eingestellt werden. Aufgrund der geringen Spaltabstände kann die Struktur mit einer geringen Spannung betrieben werden. Ein möglicher Prozessablauf sieht die Einbettung einer vorstrukturierten ICNT-Struktur vor. Die Einbettung kann mit CVD oder PVD erfolgen. Danach erfolgt die partielle Freilegung der Membran (ICNT-Schicht) durch einen Ätzschritt. Im Anschluss daran wird die obere Metallisierung aufgebracht. Danach erfolgt die Entfernung einer Opferschicht unter den CNTs. Zwischen der Unterseite der CNTs und der unteren Elektrode wird eine Spannung angelegt, die eine Feldemission bewirkt. Deformationen der Membran können präzise durch eine Stromänderung detektiert werden. Bei sehr geringen Spaltabständen (< 10 nm) kann auch der Tunneleffekt genutzt werden, der zu einer noch höheren Empfindlichkeiten führt. Ein derartiger Aufbau kann für die Detektion von Deformationen und Drücken verwendet werden. Damit können z.B. auch Nanomikrophone mit erweitertem Frequenzbereich und geringen Dimension realisiert werden.

Aktoren können ebenfalls mit einem Kondensatoraufbau realisiert werden. Im Substrat eingebettete Elektrodenfelder können eine Auslenkung der ICNT-Deckschicht bewirken. Im Zusammenhang mit der besonders glatten Oberfläche auf der ICNT-Schicht können damit z.B. deformierbare Spiegel realisiert werden. Dies könnte in Anwendungen wie Projektoren oder Nanopositioniersystemen zum Einsatz kommen.

Der in Fig. 6 dargestellte Aufbau kann auch als Ausgangspunkt für den Aufbau eines verstellbaren Interferometers verwendet werden. In dem Falle dienen die CNTs nur für die Einstellung eines gewissen Spaltabstandes. Nach der Einbettung werden die CNTs durch ein Sauerstoffplasma (remote-Plasma) entfernt. Übrig bleibt eine dünne Membran von ca. 10 nm Stärke, der hinreichend transparent im sichtbaren Spektralbereich ist. Gegebenenfalls kann diese Membran durch zusätzliche optische und stabilisierende Schichten erweitert werden. Zusammen mit einer reflektierenden Schicht auf der Substratseite entsteht auf diese Art und Weise ein Spalt, in dem für bestimmte Wellenlängen und Einstrahlwinkel Interferenzbedingung erhalten wird. Durch Anlegung einer Spannung zwischen Substrat und Membran lässt sich die Interferenzbedingung verstellen. Somit entsteht ein durchstimmbarer Interferenzfilter.

### Anwendungsbeispiel 4- Erzeugung einer Superkapazität auf Basis von Kohlenstoffnanoröhren

Angelehnt an die in den Fig. 5b und c dargestellte Struktur kann mit Hilfe der ICNT-Struktur eine neuartige Superstruktur erzeugt werden, die als Superkapazität Anwendung finden kann (Fig. 7). Eine derartige Struktur basiert auf der Kombination von zwei Ansätzen. Zum einen soll das erfindungsgemäße Herstellungsverfahren für aufgerollte Mikroröhrchen angewandt werden. Hierbei wird ein Aufrollen einer Schicht durch ein verspanntes Schichtsystem bewirkt, welches nach Freilegung delaminiert (siehe Prinz, V.Y.; Seleznev, V.A.; Gutakovsky, A.K.; Chehovskiy, A.V.; Preobrazhenskii, V.V.; Putyato, M.A.; Gavrilova, T.A.: "Free-standing and overgrown InGaAs/GaAs nanotubes, nanohelices and their arrays" Physica E: Low-dimensional Systems and Nanostructures, vol. 6(1-4), pp. 828-831, 2000; Schmidt, O.G. and Eberl, K.: "Nanotechnology: Thin solid films roll up into nanotubes" Nature, vol. 410(6825), pp. 168-168, 2001). Dies wird z.B. mit InAs/GaAs Zweischichtsystemen erreicht, die auf Grund unterschiedlicher Gitterkonstanten verspannt sind und sich nach Entfernung einer Opferschicht aufrollen. Zum anderen bildet die hier vorgestellte ICNT-Struktur eine Grundvoraussetzung.

Die Herstellung der Struktur beginnt mit der erfindungsgemäßen Erzeugung eines ICNT-Films mit senkrechten und geraden CNTs auf einer isolierenden Unterlage. Darauf wird ein Schichtsystem aufgebracht. Das Schichtsystem wird unter Berücksichtigung des Standes der Technik, z.B. des obigen Artikel von Prinz et al., so gewählt, dass eine Verspannung der Deckschicht erhalten wird. In diesem Schichtsystem befinden sich u.a. zwei Metallisierungsebenen, die durch eine Isolationsschicht getrennt sind. Die untere Metallisierung steht im direkten elektrischen Kontakt zur ICNT-Schicht. Die obere Metallschicht dient der Kontaktierung der später folgenden zweiten CNT-Schicht. Die obere CNT-Schicht wird mit einem standardmäßigen Verfahren zur Erzeugung von vertikal gerichteten CNTs erzeugt (ähnlich wie in Fig. 5b gezeigt). Um während des späteren Aufrollens des Schichtsystems ein Ineinanderschieben der CNTs zu verbessern, kann die CNT-Dichte der obersten CNT-Schicht durch Schichtdicke des Katalysators, Vorbehandlung der Katalysatorschicht, Vorstrukturierung der Unterlage und/oder der Schichtzusammensetzung gesteuert werden: da beim Zusammenrollen die anfänglich oberste, dann innere CNT-Schicht strukturbedingt komprimiert wird, sollte die Dichte der CNTs etwas niedriger sein als die der CNTs in der ICNT-Schicht. Dies gelingt beispielsweise durch eine Strukturierung des Katalysators, wie aus dem Stand der Technik bekannt. Die Strukturierung kann mittels konventioneller Lithographie oder Elektronstrahlbelichtung erhalten werden. Mit dem Lift-off- oder Ätzverfahren kann der Katalysator strukturiert werden.

Danach wird auf die obere CNT-Schicht mit Hilfe des ALD-Verfahrens ein Dielektrikum (z.B. Al₂O₃, HfO etc.) homogen auf die CNT-Oberfläche aufgetragen, um einerseits den direkten elektrischen Kontakt zwischen den beiden sich ineinanderschiebenden CNT-Schichten zu verhindern und außerdem die Kapazität des Kondensators zu steigern. Im Anschluss daran wird das verspannte Schichtsystem durch seitliche Freilegung entspannt, und die Struktur beginnt sich aufzurollen wie in Fig. 7 dargestellt. Die Freilegung kann mit verschiedenen Verfahren, wie FIB (engl. focused ion beam), Trockenätzen (nach Einbettung mit einer Schutzschicht) oder Durchbrennstrukturen realisiert werden. Beim Aufrollen schieben sich die Unter- und Oberseite ineinander. Durch beidseitige elektrische Kontaktierung und durch das Dielektrikum zwischen den beiden CNT-Schichten bildet sich ein Kondensator aus. Dieser Kondensator hat aufgrund des hohen Aspektverhältnisses der CNTs eine signifikant höhere Kapazität als andere aufgerollte Mikrotubes, die nur die Fläche der gegenüberliegenden Platten ausnutzen. Damit wird die Herstellung einer Superkapazität ermöglicht, die ein breites Anwendungsspektrum in der Versorgung von Elektronik finden kann. Besonders vielversprechend ist eine derartige Lösung für autarke und energieeffiziente nanoelektronische Systeme. Dies ermöglicht die Energieversorgung von Elektronik, Sensoren und Aktoren auf kleinstem Bauraum, was z.B. für biologische Anwendungen von großem Interesse sein könnte, die zunehmend von Mikrostrukturelementen Gebrauch machen.

### Herstellungsbeispiel 1:

Auf einem Silizium-Wafer als Substrat wurde durch thermische Oxidation eine Schicht aus 100 nm SiO₂ gebildet (Oberflächenrauigkeit RMS = 0,2 nm). Anschließend erfolgte die Sputterdeposition einer 7 nm dicken Chromschicht und einer 2,1 nm dicken Nickelschicht mit Unterbrechung an Luft. Die Targeteinheit betrug jeweils 99,99% und das Substrat befand sich bei der Abscheidung auf Raumtemperatur. Die Rauigkeiten der Oberfläche wurde mit 0,4 nm (RMS) ermittelt. Es folgte eine thermische Behandlung (Vorbehandlung) in einer N₂/H₂ (5:1) Atmosphäre bei 700 mbar und 606 °Cfür 10 min. Dabei entstand eine Katalysatorschicht aus einer Chromschicht mit Faltungen bzw. Erhebungen, zwischen denen sich Partikel aus dem Katalysatormaterial befanden. Im Anschluss an die Vorbehandlung der Probe wurde im selben Reaktor die ICNT-Schicht erzeugt. Dies wurde bei 606°C und einer N₂/H₂/C₂H₄ = 443/100/15 sccm Gasatmosphäre bei 200 mbar durchgeführt. C₂H₄ diente hierbei als Kohlenstoffquelle. Die Dauer dieser Prozessphase wurde im Bereich 3 min bis 20 min variiert. Ein 10 min-Prozess lieferte einen Schichtquerschnitte wie in Fig. 1 a abgebildet. Die sich hierbei bildenden Kohlenstoffnanoröhren wuchsen im "tip"-Modus unterhalb der strukturierten, Katalysator enthaltenden Schicht derart, dass sich anschließend eine geschlossene Deckschicht aus den beiden Metallen auf der CNT-Schicht fand. Die Dicke der Deckschicht ließ sich auf ca. 10 nm schätzen. Der Außen- und Innendurchmesser der MWCNTs betrug 21 nm und 7 nm. Die Dichte der CNTs konnte mit 1,9 x 10¹⁰ cm² bestimmt werden. Die Wachstumsrate wurde mit 395 nm/min ermittelt.

### Herstellungsbeispiel 2:

Die Prozessbedingungen wie in Bsp. 1 wurden ebenfalls auf das Schichtsystem Si/SiO₂ (100nm)/ Cr (10 nm)/Co (2,1 nm) angewandt. Unter diesen Bedingungen wurde ebenfalls eine ICNT-Schicht erhalten, jedoch mit geringerer CNT-Wachstumsrate als bei Cr/Ni (100 nm/min).

### Herstellungsbeispiel 3:

Die Herstellung gemäß diesem Beispiel unterscheidet sich von derjenigen des Beispiels 1 darin, däss erst der Katalysator als Schicht aufgebracht wird und dann die Strukturierungsschicht. Die Schrittabfolge lässt sich demnach wie folgt angeben:
1. Abscheidung von Ni (oder Co) (1,5 bis 3 nm) mit PVD (z.B. EBD oder gesputtert) auf SiO₂ (100nm)
2. Umwandlung der Ni (oder Co) Schicht in Nanopartikel durch Temperung in N₂ oder N₂/H₂-Atmosphäre (700 mbar) bei 400 - 800 °C (bevorzugt ca. 600 °C)
3. Abscheidung von Cr (5 bis 15 nm) mit PVD (z.B. EBD oder gesputtert)
4. CNT-Synthese mit CVD-Prozess bei z.B. N₂/C₂H₄/H₂ = 500/25/100 sccm bei 200 mbar und 400 - 800 °C (bevorzugt ca. 600 °C)

Der zweite Schritt kann ggf. entfallen, wenn bereits bei der Ni-Abscheidung Nanopartikel erzeugt wurden oder wenn Ni (oder Co) als Nanopartikel abgeschieden werden (z.B. aus der Dispersion, Acetatlösung oder physikalisch mit Partikelgenerator+Partikelbeam).

### Vergleichsbeispiel

Eine Referenzprobe hatte den Aufbau Si/SiO₂(100 nm)/Ta (10 nm)/Ni (2,1 nm); sie wurde im gleichen Prozess wie die Probe für das ICNT-Wachstum mit behandelt. Demnach unterlag die Referenzprobe gleichen Prozessbedingungen bei der Katalysatordicke, der Vorbehandlung und den CNT-Wachstumsbedingungen.

Man beobachtete eine bis zu 30%ige Verbesserung der Qualität der ICNT-Schicht gegenüber der Referenzschicht. Der beste Wert wurde bei 606°C, N₂/H₂/C₂H₄ = 443/100/15 sccm und 200 mbar beobachtet.

Zusammengefasst stellt die Erfindung damit unter anderem die folgenden Gegenstände, Verfahren und Verwendungszwecke bereit:
A. Ein Schichtsystem, umfassend eine Schicht aus parallel zueinander ausgerichteten Kohlenstoffnanoröhren und eine unmittelbar damit verbundene Deckschicht mit metallischen Eigenschaften.
B. Ein Schichtsystem nach Punkt A, dadurch gekennzeichnet, dass die Deckschicht Chrom in Kombination mit Cobalt und/oder Nickel enthält oder daraus besteht.
C. Ein Schichtsystem nach einem der voranstehenden Punkte, worin die die Schicht aus Kohlenstoffnanoröhren eine Dicke zwischen 1 und 5000 nm besitzt und/oder die Deckschicht eine Dicke von 4 bis 20 nm besitzt.
D. Ein Schichtsystem nach einem der voranstehenden Punkte mit einer Dichte der Kohlenstoffnanoröhren im Bereich von 5 x 10⁹ bis 5 x 10¹²/cm².
E. Ein Schichtsystem nach einem der voranstehenden Punkte, weiterhin umfassend eine Basisschicht und/oder ein Substrat.
F. Ein Schichtsystem nach Punkt E, worin die Basisschicht oder das Substrat dielektrisch sind.
G. Ein Schichtsystem nach Punkt E oder F mit einem Substrat aus Silizium und/oder einer Basisschicht aus SiO₂.
H. Ein Schichtsystem nach Punkt E, worin die Basisschicht oder das Substrat elektrisch leitend ist und vorzugsweise metallische Eigenschaften hat.
I. Ein Schichtsystem nach Punkt H, worin die Basisschicht aus TiN, TaN, Ti, Ta, Pd oder W gebildet ist.
J. Ein Schichtsystem nach einem der Punkte E bis I, worin das Substrat eine oder mehrere Ausnehmungen aufweist und sich die Schicht aus parallel zueinander ausgerichteten Kohlenstoffnanoröhren und die Deckschicht mit metallischen Eigenschaften in der oder den Ausnehmungen befinden, wobei die Oberseite der Deckschicht dort, wo sich keine Ausnehmungen befinden, vorzugsweise an die Oberseite des Substrats anschließt.
K. Ein Schichtsystem nach Punkt J, worin die Ausnehmung(en) die Form von Vias haben.
L. Ein Schichtsystem nach einem der Punkte J oder K, weiterhin umfassend eine Leitbahnebene im Substrat und/oder eine strukturierte dielektrische Barriere und eine strukturierte Metallisierungsschicht oberhalb des Schichtsystems derart, dass eine elektrische Ankontaktierung über die Ausnehmungen bzw. Vias erfolgen kann.
M. Ein Schichtsystem nach einem der Punkte E bis L, dadurch gekennzeichnet, dass die Schicht aus parallel zueinander ausgerichteten Kohlenstoffröhren weiterhin Kohlenstoffröhren aufweist, die sich zwischen den erstgenannten Kohlenstoffröhren befinden und relativ zu diesen in entgegengesetzter Richtung gewachsen sind.
N. Ein Schichtsystem nach Punkt M, dadurch gekennzeichnet, dass die Anzahl der in entgegengesetzter Richtung gewachsenen Kohlenstoffröhren pro Flächeneinheit 50 bis 100% der Anzahl der parallel zueinander ausgerichteten Kohlenstoffröhren auf dieser Flächeneinheit beträgt.
O. Ein Schichtsystem nach Punkt M oder N, umfassend eine Haftschicht, die auf dem Substrat oder der Basisschicht angeordnet ist.
P. Ein Schichtsystem nach Punkt O, worin als Katalysator für die in entgegengesetzter Richtung gewachsenen Kohlenstoffröhren Cobalt oder Nickel verwendet wurde und/oder worin die Haftschicht aus Tantal besteht und worin die Basisschicht aus SiO₂ besteht oder nicht vorhanden ist.
Q. Ein Schichtsystem nach einem der voranstehenden Punkte, weiterhin umfassend eine oder mehrere auf die Deckschicht aufgebrachte Schicht(en).
R. Ein Schichtsystem nach Punkt Q, worin eine der auf die Deckschicht aufgebrachten Schicht(en) eine zweite Schicht aus parallel zueinander ausgerichteten Kohlenstoffnanoröhren ist.
S. Ein Schichtsystem nach Punkt R, worin sich auf der zweiten Schicht aus Kohlenstoffnanoröhren eine dielektrische oder eine metallische Deckschicht befindet.
T. Verwendung eines Schichtsystems nach einem der Punkte Q bis S in oder für die Herstellung von elektronischen Nanosystemen, Flip-Chip-Verbindungen, Sensoren oder Akt(ua)toren, insbesondere von Drucksensoren, Berührungssensoren, optischen Sensoren, Spiegeln, Projektoren, optischen Filtern, Nanopositioniersystemen oder Interferometern.
U. Verwendung nach Punkt T, worin das Schichtsystem eine Basisschicht in Form einer Opferschicht aufweist, die im Verlauf der Herstellung entfernt wird.
V. Verwendung nach Punkt T, worin die Schicht aus parallel zueinander ausgerichteten Kohlenstoffröhren als Opferschicht dient, die im Verlauf der Herstellung entfernt wird.
W. Ein Schichtsystem nach Punkt Q mit einer elektrisch isolierenden.Opferschicht als Basisschicht, worin die auf die Deckschicht aufgebrachten Schichten einen Schichtaufbau bilden, der eine Vorspannung aufweist, wobei dieser Schichtaufbau zwei metallische Schichten umfasst, die durch eine Isolationsschicht getrennt sind und die untere der beiden metallischen Schichten in direktem elektrischen Kontakt mit den parallel zueinander ausgerichteten Kohlenstoffröhren steht,
   weiterhin umfassend eine zweite Schicht aus parallel zueinander ausgerichteten Kohlenstoffröhren, die sich auf der oberen der beiden metallischen Schichten befindet und mit dieser in direktem Kontakt steht, wobei die Kohlenstoffröhren der zweiten Schicht von einer dielektrischen Schicht abgedeckt sind.
X. Ein Schichtsystem nach Punkt W mit entfernter Opfernschicht in aufgerollter Form.
Y. Verwendung eines Schichtsystems nach Punkt X als Superkapazität.
Z'. Verfahren zum Herstellen eines Schichtsystems nach einem der voranstehenden Punkte, umfassend die folgenden Schritte:
   (1) Bereitstellen eines gegebenenfalls mit einer Basisschicht versehenen Substrats;
   (2) Erzeugen einer strukturierten Schicht aus einer ersten Phase, die aus einem Metall besteht, das keine eigenständige katalytische Aktivität hinsichtlich des Entstehens von CNTs aus der Gasphase aufweist, sowie einer zweiten Phase aus einem Metall, das die Entstehung von CNTs aus der Gasphase katalysiert, wobei die erste Phase eine ungleichmäßig dicke und/oder gefaltete, gegebenenfalls mit Poren durchsetzte Struktur besitzt und die zweite Phase sich in Vertiefungen und/oder Poren der ersten Phase befindet derart, dass beide Materialphasen in der lateralen Ebene zumindest teilweise nebeneinander vorliegen, auf dem Substrat bzw. der darauf befindlichen Basisschicht;
   (3) Abscheiden von Kohlenstoff aus einer kohlenwasserstoffhaltigen Gasatmosphäre, wobei sich Kohlenstoffnanoröhren bilden, die zumindest Teile der strukturierten Schicht in geschlossener Form anheben.
Z". Verfahren nach Punkt Y, dadurch gekennzeichnet, dass das Erzeugen der strukturierten Schicht dadurch erfolgt, dass auf dem Substrat oder der Basisschicht eine erste Schicht aus der ersten Phase und darauf eine zweite Schicht aus der zweiten Phase aufgebracht wird, worauf die entstandene Stapelschicht einer Temperatur von vorzugsweise oberhalb von 400°C ausgesetzt wird, vorzugsweise in einer reduzierenden Gasatmosphäre.

## Patentansprüche

1. Schichtsystem, umfassend eine Schicht aus parallel zueinander ausgerichteten Kohlenstoffnanoröhren und eine unmittelbar damit verbundene metallische Deckschicht, umfassend oder bestehend aus Chrom, Molybdän oder einer Legierung daraus oder damit.

2. Schichtsystem nach Anspruch 1, worin Partikel aus einem Metall in die Deckschicht eingebettet oder einlegiert sind, das die Entstehung von Kohlenstoffröhren aus der Gasphase katalysiert.

3. Schichtsystem nach einem der voranstehenden Ansprüche, weiterhin umfassend eine Basisschicht und/oder ein Substrat.

4. Schichtsystem nach Anspruch 3, worin das Substrat eine oder mehrere Ausnehmungen, insbesondere in Form von Vias, aufweist und sich die Schicht aus parallel zueinander ausgerichteten Kohlenstoffnanoröhren und die Deckschicht mit metallischen Eigenschaften in der oder den Ausnehmungen befinden, wobei die Oberseite der Deckschicht dort, wo sich keine Ausnehmungen befinden, vorzugsweise an die Oberseite des Substrats anschließt.

5. Schichtsystem Anspruch 4, weiterhin umfassend eine Leitbahnebene im Substrat und/oder eine strukturierte dielektrische Barriere und eine strukturierte Metallisierungsschicht oberhalb des Schichtsystems derart, dass eine elektrische Ankontaktierung über die Ausnehmungen bzw. Vias erfolgen kann.

6. Schichtsystem nach einem der Ansprüche 3 bis 5, **dadurch gekennzeichnet, dass** die Schicht aus parallel zueinander ausgerichteten Kohlenstoffröhren weiterhin Kotilenstoffröhren aufweist, die sich zwischen den erstgenannten Kohlenstoffröhren befinden und relativ zu diesen in entgegengesetzter Richtung gewachsen sind.

7. Schichtsystem nach Anspruch 6, worin als Katalysator für die in entgegengesetzter Richtung gewachsenen Kohlenstoffröhren Cobalt oder Nickel verwendet wurde und/oder worin die Basisschicht aus SiO₂ besteht oder nicht vorhanden ist.

8. Schichtsystem nach einem der voranstehenden Ansprüche, weiterhin umfassend eine oder mehrere auf die Deckschicht aufgebrachte Schicht(en), worin vorzugsweise eine der auf die Deckschicht aufgebrachten Schicht(en) eine zweite Schicht aus parallel zueinander ausgerichteten Kohlenstoffnanoröhren ist.

9. Verwendung eines Schichtsystems nach einem der voranstehenden Ansprüche in oder für die Herstellung einer Vorrichtung, vorzugsweise ausgewählt unter elektronischen Nanosystemen, elektronischen Bauelementen, Flip-Chip-Verbindungen, Sensoren oder Aktoren, insbesondere unter Drucksensoren, Berührungssensoren, Feuchtigkeitssensoren, optischen Sensoren, Spiegeln, Projektoren, optischen Filtern, Nanopositioniersystemen, Leuchtdioden und Displays, die jeweils vorzugsweise flexibel sind, Interferometern, und/oder Verwendung dieses Schichtsystems als schwarze Absorptionsschicht.

10. Verwendung nach Anspruch 9, worin das Schichtsystem eine Basisschicht in Form einer Opferschicht aufweist, die im Verlauf der Herstellung entfernt wird.

11. Verwendung nach Anspruch 9, worin die Schicht aus parallel zueinander ausgerichteten Kohlenstoffröhren als Opferschicht dient, die im Verlauf der Herstellung entfernt wird.

12. Verwendung nach Anspruch 9, **dadurch gekennzeichnet, dass** das Schichtsystem auf eine Haftschicht eines vorzugsweise flexiblen Trägers übertragen und dieser Träger anschließend in die Vorrichtung eingebaut wird oder wurde.

13. Schichtsystem nach Anspruch 8 mit einer elektrisch isolierenden Opferschicht als Basisschicht, worin die auf die Deckschicht aufgebrachten Schichten einen Schichtaufbau bilden, der eine Vorspannung aufweist, wobei dieser Schichtaufbau zwei metallische Schichten umfasst, die durch eine Isolationsschicht getrennt sind und die untere der beiden metallischen Schichten in direktem elektrischen Kontakt mit den parallel zueinander ausgerichteten Kohlenstoffröhren steht,
weiterhin umfassend eine zweite Schicht aus parallel zueinander ausgerichteten Kohlenstoffröhren, die sich auf der oberen der beiden metallischen Schichten befindet und mit dieser in direktem Kontakt steht, wobei die Kohlenstoffröhren der zweiten Schicht von einer dielektrischen Schicht abgedeckt sind

14. Schichtsystem nach Anspruch 13 mit entfernter Opferschicht in aufgerollter Form.

15. Verwendung eines Schichtsystems nach Anspruch 13 als Superkapazität.

16. Verfahren zum Herstellen eines Schichtsystems nach einem der voranstehenden Ansprüche, umfassend die folgenden Schritte:
(1) Bereitstellen eines gegebenenfalls mit einer Basisschicht versehenen Substrats;
(2) Erzeugen einer strukturierten Schicht aus einer ersten Phase, die aus einem Metall besteht, das keine eigenständige katalytische Aktivität hinsichtlich des Entstehens von CNTs aus der Gasphase aufweist, wobei dieses Metall Chrom, Molybdän oder eine Legierung aus oder mit einem dieser Metalle ist, sowie einer zweiten Phase aus einem Metall, das die Entstehung von CNTs aus der Gasphase katalysiert, ausgewählt unter Cobalt, Nickel, Eisen sowie Legierungen dieser Materialien wobei die erste Phase eine ungleichmäßig dicke und/oder gefaltete, gegebenenfalls mit Poren durchsetzte Struktur besitzt und die zweite Phase sich in Vertiefungen und/oder Poren der ersten Phase befindet derart, dass beide Materialphasen in der lateralen Ebene zumindest teilweise nebeneinander vorliegen, auf dem Substrat bzw. der darauf befindlichen Basisschicht;
(3) Abscheiden von Kohlenstoff aus einer kohlenwasserstoffhaltigen Gasatmosphäre, wobei sich Kohlenstoffnanoröhren bilden, die zumindest Teile der strukturierten Schicht in geschlossener Form anheben.

17. Verfahren nach Anspruch 16, **dadurch gekennzeichnet, dass** das Erzeugen der strukturierten Schicht dadurch erfolgt, dass auf dem Substrat oder der Basisschicht eine erste Schicht aus der ersten Phase und darauf eine zweite Schicht aus der zweiten Phase aufgebracht wird, worauf die entstandene Stapelschicht einer Temperatur von vorzugsweise oberhalb von 400°C ausgesetzt wird, vorzugsweise in einer reduzierenden Gasatmosphäre.

18. Verfahren nach Anspruch 16, **dadurch gekennzeichnet, dass** das Erzeugen der strukturierten Schicht dadurch erfolgt, dass auf dem Substrat oder der Basisschicht Nanopartikel aus der zweiten Phase bereitgestellt werden, worauf eine Schicht aus der ersten Phase aufgebracht wird, und sodann die entstandene Stapelschicht einer Temperatur von vorzugsweise oberhalb von 400°C ausgesetzt wird, vorzugsweise in einer reduzierenden Gasatmosphäre, worin die Nanopartikel der zweiten Phase vorzugsweise bereits in Form von Partikeln auf das Substrat oder die Basisschicht aufgebracht werden oder worin die Nanopartikel der zweiten Phase vorzugsweise dadurch erzeugt werden, dass eine Schicht aus dem Material der zweiten Phase erzeugt und anschließend in Nanopartikel überführt wird.

## Claims

1. A layer system comprising a layer made of carbon nanotubes aligned parallel to one another and a metallic top layer directly connected thereto, comprising chromium, molybdenum, or an alloy made from it or with it.

2. The layer system according to claim 1, wherein particles made of metal are embedded or alloyed in the top layer, wherein the metal catalyzes the production of carbon tubes from the gas phase.

3. The layer system according to any one of the preceding claims, further comprising a base layer or a substrate.

4. The layer system according to claim 3, wherein the substrate has one or more recesses, in particular in the form of vias, and the layer made of carbon nanotubes aligned parallel to one another and the metallic layer are located in the recess(es), wherein the upper side of the top layer, where there are no recesses, is preferably joined to the upper side of the substrate.

5. The layer system according to claim 4, further comprising a conductive layer in the substrate and/or a structured dielectric barrier and a structured metallization layer above the layer system, in such a way that an electrical connection can take place through the recesses or the vias.

6. The layer system according to any one of claims 3 to 5, wherein the layer made of carbon tubes aligned parallel to one another has additional carbon tubes, which are located between the carbon tubes, and have grown relative to these in the opposite direction.

7. The layer system according to claim 6, wherein cobalt or nickel was used as a catalyst for the carbon tubes that have grown in the opposite direction, or wherein the base layer consists of SiO₂ or does not exist.

8. The layer system according to any one of the preceding claims, further comprising one or more layers applied on the top layer, wherein preferably one of the layers applied on the top layer is a second layer made of carbon nanotubes aligned parallel to one another.

9. Use of a layer system according to any one of the preceding claims for the in or for the manufacturing of a device, preferably selected among electronic nanosystems, electronic components, flip-chip connections, sensors, or actuators, in particular among pressure sensors, contact sensors, humidity sensors, optical sensors, mirrors, projectors, optical filters, nanopositioning systems, light-emitting diodes and displays, each of which are preferably flexible, interferometers, or the use of such layer system as a black absorption layer.

10. The use according to claim 9, wherein the layer system has a base layer in the form of a sacrificial layer, which is removed in the course of production.

11. The use according to claim 9, wherein the layer made of carbon nanotubes aligned parallel to one another serves as a sacrificial layer, which is removed in the course of production.

12. The use according to claim 9, wherein the layer system is or has been transferred to an adhesive layer of a carrier that is preferably flexible, and wherein this carrier is or has been subsequently installed in the device.

13. The layer system according to claim 8 with an electrically insulating sacrificial layer as a base layer, wherein the layers applied on the top layer form a layer structure, which has an initial tension, wherein the layer structure comprises two metallic layers, which are separated by an insulation layer, and wherein the lower one of the two metallic layers is in direct electrical contact with the carbon tubes aligned parallel to one another, further comprising a second layer of carbon tubes aligned parallel to one another, which is located on the upper one of the two metallic layers and which is in direct contact with it, wherein the carbon tubes of the second layer are covered by a dielectric layer.

14. The layer system according to claim 13 with a removed sacrificial layer in a coiled form.

15. Use of a layer system according to claim 13 as a supercapacitor.

16. A method for producing a layer system according to any one of the preceding claims, comprising the following steps:
(1) providing a substrate, optionally with a base layer;
(2) producing a structured layer from a first phase, which consists of a metal that has no independent catalytic activity with respect to the production of CNTs from the gas phase, wherein the metal is chromium, molybdenum, or an alloy made of or with one of these metals, along with a second phase made of a metal that catalyzes the production of CNTs from the gas phase, selected from among cobalt, nickel, iron, and alloys of these materials, wherein the first phase has a structure that is unevenly thick and/or folded and optionally interspersed with pores, and wherein the second phase is located in recesses and/or pores of the first phase in such a way that the two material phases in the lateral level are at least partially adjacent to one another on the substrate or the base layer located on the substrate; and
(3) removing carbon from a gas atmosphere containing hydrocarbons, wherein carbon nanotubes form, which raise at least parts of the structured layer in a closed form.

17. The method according to claim 16, wherein the production of a structured layer takes place in such a way that a first layer from the first phase and, thereupon, a second layer from the second phase, is applied on the substrate or the base layer, whereupon the stack layer that has formed is exposed to a temperature of preferably over 400° C, preferably in a reducing gas atmosphere.

18. The method according to claim 16, wherein the production of the structured layer takes place by providing nanoparticles of the second phase on the substrate or the base layer, whereupon a layer of the first phase is applied, and subsequently the stack layer that has formed is exposed to a temperature of preferably over 400° C, preferably in a reducing gas atmosphere, wherein the nanoparticles of the second phase are applied, preferably already in the form of particles, on the substrate or the base layer and wherein the nanoparticles of the second phase is preferably produced by preparing a layer of the material of the second phase and subsequently transferring the layer into nanoparticles.

## Revendications

1. Système de couches, comprenant une couche de nanotubes de carbone orientés parallèlement les uns aux autres et une couche de recouvrement à propriétés métalliques directement liée à celle-ci, comprenant ou se composant de chrome, de molybdène ou d'un alliage de ceux-ci ou avec ceux-ci.

2. Système de couches selon la revendication 1, dans lequel des particules d'un métal, qui catalyse l'apparition de tubes de carbone à partir de la phase gazeuse, sont incorporées ou alliées dans la couche de recouvrement.

3. Système de couches selon l'une quelconque des revendications précédentes, comprenant en outre une couche de base et/ou un substrat.

4. Système de couches selon la revendication 3, dans lequel le substrat présente un(e) ou plusieurs cavité(s), en particulier en forme de via(s), et la couche de nanotubes de carbone orientés parallèlement les uns aux autres et la couche de recouvrement à propriétés métalliques se trouvent dans la ou les cavité(s), dans lequel le côté supérieur de la couche de recouvrement se raccorde de préférence au côté supérieur du substrat à l'endroit où il ne se trouve aucune cavité.

5. Système de couches selon la revendication 4, comprenant en outre un plan des pistes conductrices dans le substrat et/ou une barrière diélectrique structurée et une couche de métallisation structurée au-dessus du système de couches, de telle manière qu'il puisse se produire une mise en contact électrique au moyen des cavités ou des vias.

6. Système de couches selon l'une des revendications 3 à 5, **caractérisé en ce que** la couche de tubes de carbone orientés parallèlement les uns aux autres présente en outre des tubes de carbone, qui se trouvent entre les premiers tubes de carbone mentionnés et dont la croissance s'est faite en direction opposée à ceux-ci.

7. Système de couches selon la revendication 6, dans lequel on a utilisé du cobalt ou du nickel comme catalyseur pour les tubes de carbone obtenus par croissance en direction opposée et/ou dans lequel la couche de base se compose de SiO₂ ou n'est pas présente.

8. Système de couches selon l'une quelconque des revendications précédentes, comprenant en outre une ou plusieurs couche(s) déposée(s) sur la couche de recouvrement, dans lequel une des couche(s) déposée(s) sur la couche de recouvrement est une deuxième couche de nanotubes de carbone orientés parallèlement les uns aux autres.

9. Utilisation d'un système de couches selon l'une quelconque des revendications précédentes dans ou pour la fabrication d'un dispositif, de préférence choisi parmi des nanosystèmes électroniques, des composants électroniques, des montages flip chip, des capteurs ou des actionneurs, en particulier parmi des capteurs de pression, des capteurs de contact, des détecteurs d'humidité, des capteurs optiques, des miroirs, des projecteurs, des filtres optiques, des systèmes de nanopositionnement, des diodes électroluminescentes et des écrans d'affichage, qui sont respectivement de préférence flexibles, des interféromètres, et/ou utilisation de ce système de couches comme couche d'absorption noire.

10. Utilisation selon la revendication 9, dans laquelle le système de couches présente une couche de base sous la forme d'une couche sacrificielle, qui est enlevée au cours de la fabrication.

11. Utilisation selon la revendication 9, dans laquelle la couche de tubes de carbone orientés parallèlement les uns aux autres sert de couche sacrificielle, qui est enlevée au cours de la fabrication.

12. Utilisation selon la revendication 9, **caractérisée en ce que** le système de couches est ou a été transféré sur une couche adhésive d'un support de préférence flexible et ce support est ou a été ensuite installé dans le dispositif.

13. Système de couches selon la revendication 8 avec une couche sacrificielle électriquement isolante comme couche de base, dans lequel les couches déposées sur la couche de recouvrement forment une structure stratifiée, qui présente une précontrainte, dans lequel cette structure stratifiée comprend deux couches métalliques, qui sont séparées par une couche isolante et la couche inférieure des deux couches métalliques est en contact électrique direct avec les tubes de carbone orientés parallèlement les uns aux autres, comprenant en outre une deuxième couche de tubes de carbone orientés parallèlement les uns aux autres, qui se trouve sur la couche supérieure des deux couches métalliques et qui est en contact direct avec celle-ci, dans lequel les tubes de carbone de la deuxième couche sont recouverts par une couche diélectrique.

14. Système de couches selon la revendication 13, avec la couche sacrificielle enlevée sous forme enroulée.

15. Utilisation d'un système de couches selon la revendication 13 comme supercondensateur.

16. Procédé de fabrication d'un système de couches selon l'une quelconque des revendications précédentes, comprenant les étapes suivantes:
(1) préparer un substrat éventuellement muni d'une couche de base;
(2) produire une couche structurée composée d'une première phase, qui est constituée d'un métal qui ne présente pas d'activité catalytique propre en ce qui concerne la formation de NTC à partir de la phase gazeuse, dans lequel ce métal est le chrome, le molybdène ou un alliage de ou avec un de ces métaux, et d'une deuxième phase constituée d'un métal qui catalyse la formation de NTC à partir de la phase gazeuse, choisi parmi le cobalt, le nickel, le fer et des alliages de ces matériaux, dans lequel la première phase présente une structure d'une épaisseur irrégulière et/ou liée, éventuellement traversée par des vias, et la deuxième phase se trouve dans des cavités et/ou des vias de la première phase, de telle manière que les deux phases de matière soient au moins partiellement juxtaposées dans le plan latéral, sur le substrat ou sur la couche de base se trouvant sur celui-ci;
(3) déposer du carbone à partir d'une atmosphère gazeuse hydrocarbonée, dans lequel il se forme des nanotubes de carbone qui soulèvent au moins des parties de la couche structurée sous forme fermée.

17. Procédé selon la revendication 16, **caractérisé en ce que** la production de la couche structurée est effectuée par le fait que l'on dépose sur le substrat ou sur la couche de base une première couche composée de la première phase et sur celle-ci une deuxième couche composée de la deuxième phase, puis la pile de couches formée est exposée à une température de préférence supérieure à 400°C, de préférence dans une atmosphère de gaz réducteur.

18. Procédé selon la revendication 16, **caractérisé en ce que** la production de la couche structurée est effectuée par le fait que l'on prépare sur le substrat ou sur la couche de base des nanoparticules composées de la deuxième phase, puis on dépose une couche composée de la première phase, et ensuite on expose la pile de couches formée à une température de préférence supérieure à 400°C, de préférence dans une atmosphère de gaz réducteur, dans lequel on dépose les nanoparticules composées de la deuxième phase de préférence déjà sous la forme de particules sur le substrat ou sur la couche de base ou dans lequel on produit les nanoparticules composées de la deuxième phase de préférence par le fait que l'on produit une couche composée du matériau de la deuxième phase et qu'on la transforme ensuite en nanoparticules.
